(19) Europäisches Patentamt
European Patent Office
Office européen des brevets

(11) **EP 3 624 141 B1**

(12) **EUROPÄISCHE PATENTSCHRIFT**

(45) Veröffentlichungstag und Bekanntmachung des Hinweises auf die Patenterteilung:
**01.11.2023   Patentblatt 2023/44**

(21) Anmeldenummer: **18194581.7**

(22) Anmeldetag: **14.09.2018**

(51) Internationale Patentklassifikation (IPC):
**H01B 7/42** *(2006.01)*    **B60L 53/18** *(2019.01)*
**H01B 9/00** *(2006.01)*

(52) Gemeinsame Patentklassifikation (CPC):
**H01B 7/425; B60L 53/18;** H01B 9/006; Y02T 10/70; Y02T 10/7072; Y02T 90/14

(54) **KÜHLBARE EINZELLEITUNG UND LADEKABEL**

COOLABLE INDIVIDUAL LINE AND CHARGING CABLE

LIGNE INDIVIDUELLE POUVANT ÊTRE REFROIDIE ET CÂBLE DE CHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.03.2020   Patentblatt 2020/12**

(73) Patentinhaber: **BRUGG eConnect AG**
**5200 Brugg AG (CH)**

(72) Erfinder:
• **MARTINEZ VALL, Albert**
**5400 Baden (CH)**
• **OSLISLOK, Tomasz**
**5330 Bad Zurzach (CH)**
• **SEKULA, Oldrich**
**8454 Buchberg (CH)**
• **DIETIKER, Hans**
**5502 Hunzenschwil (CH)**

(74) Vertreter: **Daub, Thomas**
**Patent- und Rechtsanwaltskanzlei Daub**
**Bahnhofstrasse 5**
**88662 Überlingen (DE)**

(56) Entgegenhaltungen:
EP-A1- 3 179 485     EP-A2- 0 751 536
CN-A- 108 320 846     FR-A- 943 162

## Beschreibung

### Technisches Gebiet

Die Erfindung betrifft eine Einzelleitung für ein Ladekabel, ein Ladekabel mit derartigen Einzelleitungen, ein Ladesystem in welchem das Ladekabel eingesetzt wird sowie ein Verfahren zum Laden eines Energiespeichers, insbesondere einer Antriebsbatterie eines Fahrzeuges, bei welchem ein erfindungsgemässes Ladekabel zum Einsatz kommt.

### Stand der Technik

Die CN 1 06 782 835 A (Shenzhen Baoxing) beschreibt ein Autoladel<abel. Es umfasst flexible Schläuche aus einem elektrisch isolierenden Material, durch welche ein I<ühlfluid zirkulieren kann. Die Schläuche verlaufen im Inneren der stromübertragenden Leiteranordnung.

Einen ähnlichen Ansatz, also die Nutzung von Schläuchen oder Rohren im Inneren der Leiteranordnung, schlagen auch die US 2012 199 390 A1 (Hitachi Cable) und die CN 1 06 849 227A (Shenzhen Woer) vor.

Diese Anordnungen haben den Nachteil, dass die Wärme, die in den Leiteranordnungen entsteht, durch das Schlauchmaterial hindurch geleitet werden muss, bevor sie durch das I<ühlfluid abtransportiert werden kann. Die Kühlung erfolgt zeitverzögert und weniger effizient.

Die CN 1 06 887 277 A (Jiangsu Shengbide Special) und die DE 20 2015 009 531 U1 (Porsche) lassen hingegen ein I<ühlfluid auf der Aussenseite der Leiteranordnung vorbeilaufen, da die I<ontal<tfläche dort grösser ist und die Wärmeabgabe somit effizierter sein kann.

Derartige Anordnungen haben den Nachteil, dass die Kühlung leicht unterbrochen werden kann, wenn Druck von aussen auf dem Kabel lastet. Gerade bei Ladel<abeln für Fahrzeuge, wie beispielsweise PKW, besteht die Gefahr, dass ein Mensch oder ein Fahrzeug auf dem I<abel steht und den I<ühlmittell<anal abdrückt. Wird der I<ühlmittell<anal verstärkt, um diesem Problem vorzubeugen, so muss das I<abel entsprechend dicker werden und verliert damit an Handlichkeit.

Zur Übertragung von Hochströmen bei Hochfrequenzen schlägt die EP 3 179 485 A1 (Schmidt Hochstrom GmbH) die Nutzung von gekühlten Koaxialkabeln vor, bei denen alle Drähte gegeneinander isoliert sind.

### Darstellung der Erfindung

Ein Ladekabel soll von seinem Durchmesser derart gestaltet sein, dass ein Mensch es gut greifen kann, also einen möglichst kleinen Durchmesser von bevorzugt weniger als 5 cm haben. Es soll so flexibel und leicht wie möglich sein, um gut handhabbar zu sein.

Ausserdem darf es sich nicht so stark erhitzen, dass es für den Nutzer unangenehm zu fassen ist. Ab etwa 40°C Oberflächentemperatur wird es sehr unangenehm einen Gegenstand, beispielsweise ein Ladekabel, zu greifen. Es muss robust sein und das Überfahren mit einem Auto vertragen. Neben all diesen Anforderungen muss das Ladekabel hohe Ströme übertragen können. Der aktuell übliche Ladestrom ist bei 200 A. Es ist aber durchaus denkbar, dass in näherer Zukunft auch noch höhere Ströme übertragen werden sollen und zwar insbesondere bis zu 700 A. Es ist daher wünschenswert, ein I<abel zur Verfügung zu stellen, welches sich an den zu übertragenden Strom angepasst betreiben lässt.

Aufgabe der Erfindung ist es, eine dem eingangs genannten technischen Gebiet zugehörende Einzelleitung zu schaffen, welche leicht und flexibel ist und dennoch grosse Ströme übertragen kann, ohne unangenehm heiss zu werden. Ein I<abel, in welchem derartige Einzelleitungen verbaut sind, kann ebenfalls leichter und flexibler gestaltet werden als ein vergleichbares I<abel mit andersartigen Einzelleitungen.

Die Lösung der Aufgabe ist durch die Merkmale des Anspruchs 1 definiert. Gemäss der Erfindung umfasst eine Einzelleitung für ein Ladekabel, eine offene Stützstruktur mit einer Längsausdehnung, ein Leitergeflecht aus Leitern und eine Isolierung. Das Leitergeflecht umhüllt die offene Stützstruktur entlang ihrer Längsausdehnung unmittelbar. Die Isolierung umhüllt die offene Stützstruktur und das Leitergeflecht. In der Einzelleitung für ein Ladekabel ist mindestens ein I<anal für ein I<ühlfluid vorhanden. Dieser I<anal wird durch die Stützstruktur und das Leitergeflecht gebildet. Die Isolierung ist für das I<ühlfluid undurchdringbar und elektrisch isolierend. Bevorzugt ist das Leitergeflecht für das I<ühlfluid durchdringbar.

Da das I<ühlfluid durch die offene Stützstruktur direkt mit der Leiteranordnung in Kontakt treten kann, ist die I<ühlung sehr effizient: Einerseits muss die Wärme nicht durch einen Schlauch oder eine andere Art von Trennschicht geleitet werden, andererseits hat ein Leitergeflecht eine grössere Oberfläche als die Innenseite eines I<reiszylinders, durch welchen ein Schlauch approximiert werden kann.

Die Leiteranordnung umfasst das Leitergeflecht und gegebenenfalls weitere mit dem Leitergeflecht in elektrischen Kontakt stehende Leiter der Einzelleitung.

Ein innenliegender I<ühll<anal ist ausserdem besser vor einem Abdrücken geschützt als ein aussenliegender Mantel.

Bisher waren innenliegende, offene I<ühll<anäle bei flexiblen I<abeln kaum realisierbar: Die Leiter eines Leistungskabels werden typischerweise verseilt oder verdrillt. Verseilt oder verdrillt man Drähte um eine offene Stützstruktur, so passiert es sehr leicht, dass diese Drähte in die Stützstruktur rutschen und die eigentlich als Kanäle vorgesehenen Strukturen zumindest teilweise blockieren. Die Erfindung löst dieses Problem, indem sie die Stützstruktur mit einem Leitergeflecht umgibt. Solche Leitergeflechte sind beispielsweise von I<abelabschirmungen bekannt, wurde bisher aber nicht zur Übertragung von grösseren Leistungen eingesetzt.

Das Leitergeflecht kann bereits aus sich heraus einen Hohlzylinder bilden. Allerdings verändert sich der Innendurchmesser eines solchen, durch ein Leitergeflecht gebildeten Hohlzylinders wenn er entlang seiner Längsachse gestreckt oder gestaucht wird. Da ein Ladekabel flexibel sein soll, würde ein Leitergeflecht ohne Stützstruktur in einem Ladekabel einen Hohlzylinder mit wechselnden und unter Umständen auch sehr kleinen Innendurchmessern darstellen. Eine zuverlässige Kühlung könnte so kaum erreicht werden. Die Stützstruktur sorgt nun dafür, dass der Innendurchmesser stets einen bestimmten Minimalwert hat. Ausserdem erhöht sie die Überrollfestigl<eit der Einzelleitung: Da auf den Leiter wirkende Druckkräfte teilweise durch die Isolation und das Leitergeflecht aufgenommen werden und durch diese räumlich etwas verteilt werden, ist die lokale Belastung auf der innenliegenden Stützstruktur geringer als bei einer ausserhalb der Leiteranordnung liegenden Stützstruktur. Die Stützstruktur kann so stabil gebaut werden, wie nötig um den gewünschten Kräften standhalten zu können.

Eine offene Stützstruktur ist eine längliche Struktur deren konvexe Hülle die Form eines Zylinders hat, wobei entlang und im Inneren der konvexen Hülle mindestens ein durchgehender I<anal, also ein I<anal der nicht von der Struktur unterbrochen wird, verläuft. Bei dieser Betrachtung soll die Stützstruktur bevorzugt als in ihrer Längsrichtung unendlich ausgedehnt angenommen werden.

Ein Beispiel für eine offene Stützstruktur ist eine Helix aus einem Runddraht mit einem Drahtdurchmesser d und mit einer Ganghöhe h, die grösser ist als der Drahtdurchmesser d.

In diesem Fall ist die konvexe Hülle ein I<reiszylinder. Der I<anal stellt ebenfalls einen Helix dar und verläuft um die halbe Ganghöhe h versetzt zu dem Draht. Die Breite des I<anals ist gleich der Ganghöhe h abzüglich des Drahtdurchmessers d. Dieser I<anal wird durch die Stützstruktur nicht unterbrochen. Somit handelt es sich um eine offene Stützstruktur im Sinne der Erfindung.

Ein anderes Beispiel ist ein offenes Profil, welches im Querschnitt kreuz- oder sternförmig ist: Die konvexe Hülle ist in diesem Fall ein Zylinder mit einem Rechteck oder einem Polygon als Grundfläche. Die I<anäle, es sind mehrere, verlaufen parallel zur Längsachse des Zylinders oder des Profils. Somit handelt es sich auch hier um eine offene Stützstruktur im Sinne der Erfindung.

Ein Schlauch oder ein Rohr sind hingegen keine offenen Stützstrukturen, da der von ihnen gebildete I<anal nicht entlang ihrer konvexen Hülle verläuft sondern vollständig innerhalb von ihr.

Besitzt der Schlauch oder das Rohr hingegen Öffnungen in seiner Seitenwand, so verläuft der I<anal zumindest im Bereich dieser Öffnungen entlang der konvexen Hülle. Es handelt sich dann also um eine offene Stützstruktur.

Leiter sind, im Sinne dieser Erfindung, länglich und bestehen aus elektrisch leitfähigem Material. Leiter können beispielsweise Drähte oder Bänder aus Metall sein. Bevorzugt bestehen Leiter aus einem gut leitenden Material, wobei sie beschichtet sein können. Ein gut leitendes Material hat bevorzugt einen spezifischen Widerstand von weniger als $10^{-5}$ $\Omega$m bei 20°C. Die Beschichtung kann beispielsweise vor Korrosion schützen. Bevorzugt soll auch die Beschichtung leitfähig sein, sie kann aber weniger gut leitfähig sein als das gut leitende Material. Eine Beschichtung ist dabei insbesondere dünner als 100$\mu$m.

Ein Geflecht, und damit auch das Leitergeflecht, ist ein Produkt, welches durch regelmässiges unter- und über-kreuzen der Leiter erzeugt wird. Die Leiter können sich dabei in einem Winkel von 90° oder in einem anderen Winkel kreuzen. Das Geflecht kann eine ebene Fläche oder Matte bilden, sich also in zwei Dimensionen beliebig weit ausdehnen, oder in einer zylinderähnliche Form vorliegen, die sich nur in einer Dimension beliebig weit ausdehnt und in den anderen beiden Raumdimensionen beschränkt ist. Bevorzugt kreuzen sich die Leiter in einem Winkel ungleich 90° und das Geflecht bildet eine zylinderähnliche Form.

Mit "unmittelbar umhüllen" wird hier und im Folgenden insbesondere gemeint, dass keine weiteren Schichten oder Strukturen zwischen dem Umhüllten und dem Umhüllenden vorgesehen sind. Dabei sollen Hohlräume und/oder I<ühlfluid nicht als Schicht oder Struktur angesehen werden.

Mit "umhüllen" wird hier und im Folgenden insbesondere gemeint, dass es durchaus weitere Schichten oder Strukturen zwischen dem Umhüllten und dem Umhüllenden geben kann, diese aber nicht zwingend vorhanden sein müssen.

Elektrisch isolierend im Sinne dieser Erfindung ist insbesondere ein Werkstoff mit einem spezifischen Widerstand von mehr als $10^5$ S2m, bevorzugt von mehr als $10^{10}$ S2m. Die Erfindung kann insbesondere Ethylen-Propylen-Dien-I<autschul< (EPDM) und/oder thermoplastische Elastomere (TPE) als isolierende Materialien nutzen.

Das Leitergeflecht kann für das I<ühlfluid durchdringbar sein, obwohl die Leiter selbst es nicht sind, da es in dem Geflecht Zwischenräume zwischen den Leitern gibt. Ein solches Geflecht mit Zwischenräumen, welches für das I<ühlfluid durchdringbar ist, hat den Vorteil, dass sich die Kontaktfläche zwischen I<ühlfluid und Leitern deutlich erhöht und somit die Wärme effizient an das I<ühlfluid abgegeben werden kann. Ausserdem ist ein Geflecht mit Zwischenräumen flexibler, war die Flexibilität der Einzelleitung als Ganzes erhöht.

Die Isolierung der Einzelleitungen ist bevorzugt etwas elastisch, so dass sie sich im Betrieb unter dem Druck des I<ühlfluids leicht weiten kann. Unter dem Betriebsdruck des I<ühlfluids beträgt dieses Aufweiten, gemessen als Aussenradius der Isolierung, insbesondere nicht mehr als 10% des Aussenradius in der Abwesenheit von I<ühlfluid. Die Isolierung kann insbesondere aus EPDM oder TPE bestehen.

In einer Ausführungsform ist das Leitergeflecht entlang seiner Längsausdehnung von weiteren Leitern umgeben. Diese weiteren Leiter sind mit dem Leitergeflecht in elektrischem Kontakt. Die weiteren Leiter liegen entweder selbst als ein oder mehrere Geflechte vor und sind koaxial um das Leitergeflecht herum angeordnet oder die weiteren Leiter sind um das Leitergeflecht herum verdrillt. Diese Leiter und das Leitergeflecht stellen zusammen die Leiteranordnung da.

Es ist auch möglich, dass es einige Leiter gibt, die in Geflechten angeordnet sind, welche koaxial zum Leitergeflecht liegen und andere Leiter entweder zwischen den Geflechten um das Leitergeflecht oder ein weiteres Geflecht herum verdrillt sind oder um alle Geflechte herum verdrillt sind.

Um grosse Ströme übertragen zu können, sollte die Einzelleitung einen gewissen Leiterquerschnitt aufweisen. Ein einfach herzustellendes und flexibles Leitergeflecht besteht aber bevorzugt aus nicht allzu dicken Leitern. Eine Erhöhung des Leiterquerschnitts durch die Nutzung dickerer Leiter ist daher nur in gewissen Grenzen praktikabel. Unter einem dickeren Leiter sei hier insbesondere ein Leiter zu verstehen, dessen Durchmesser in jeder Richtung grösser als 2mm ist. Einfacher erreicht man eine Erhöhung des Leiterquerschnitts indem man weitere Leiter um das die Stützstruktur umhüllende Leitergeflecht herum anordnet.

Diese Leiter können ebenfalls als Geflechte angeordnet werden, was den Vorteil hat, dass sich das Leitergeflecht und die darüber liegenden Leiterschichten in Eigenschaften wie Flexibilität und Durchlässigkeit für I<ühlfluid einfach aneinander angleichen lassen und ausserdem in der Herstellung nur eine Flechtmaschine benötigt wird.

Andererseits ist Verflechten in der Herstellung aufwendiger als das für Leitungen übliche Verdrillen der Leiter. Da der I<anal für das Kühlmittel durch das Leitergeflecht vor dem Hineinrutschen verdrillter Leiter geschützt wird, können weitere Leiter auf das Leitergeflecht verdrillt werden, ohne dass der I<anal in Mitleidenschaft gezogen wird.

Mit dem Begriff Leiterquerschnitt ist hier und im Folgenden die gesamte Querschnittsfläche gemeint, die im Querschnitt der jeweiligen Leitung, von Leitern eingenommen wird. Umfasst eine Leitung oder ein I<abel also beispielsweise drei Drähte als Leiter, die jeweils einen kreisrunden Querschnitt mit einem Radius r haben, so ist der Leiterquerschnitt dieser Leitung oder dieses I<abels $3\pi r^2$. Falls sich der Leiterquerschnitt nicht aus derartigen geometrischen Überlegungen herleiten lässt, so kann ein Probestück des I<abels oder der Leitung mit bekannter Länge genommen werden. Nun trennt man die Leiter von den übrigen Bestandteilen des I<abels und wiegt sie. Bei bekannter Dichte des Leitermaterials lässt sich so das Volumen der Leiter bestimmen. Teilt man dieses durch die bekannte Länge des Probestückes, so erhält man einen Wert für den Leiterquerschnitt.

Der Widerstand eines Leiters, und somit auch die Wärme, die in ihm durch einen bestimmten Strom erzeugt wird, sind proportional zum Querschnitt dieses Leiters. Ein grosser Leiterquerschnitt reduziert daher die entstehende Wärme. Gleichzeitig sind die Leitermaterialien aber dicht und oft wenig flexibel. Für ein Ladekabel ist es daher von Vorteil einen möglichst geringen Leiterquerschnitt zu haben, der aber natürlich noch ausreicht um die Anforderungen an die Wärmebildung zu erfüllen. Dasselbe gilt dementsprechend für die Einzelleitung des Ladekabels.

In einer bevorzugten Ausführungsform sind die weiteren Leiter der Einzelleitung derart angeordnet, dass auch sie für das I<ühlfluid durchdringbar sind. Diese Ausführungsform hat den Vorteil, dass die Fläche, die die in den Leiter entstehende Wärme abgeben kann, sehr gross ist. Ausserdem erreicht man so auf einfache Art eine vergleichsweise homogene Temperaturverteilung zwischen allen beteiligten Leitern.

In einer Ausführungsform ist die Stützstruktur eine Helix oder ein offenes Profil. Das offene Profil hat insbesondere einen Stern-Querschnitt.

Eine Helix im mathematischen Sinne ist eine Kurve, die sich mit konstanter Steigung um den Mantel eines I<reiszylinders windet. Der Durchmesser der Grundfläche des I<reiszylinders ist der Durchmesser der Helix. Die Ganghöhe ist diejenige Strecke, um die sich die Helix bei einer vollen Umdrehung um den Zylinder in Richtung der Längsachse des Zylinders windet. Die Steigung der Helix ist das Verhältnis der Ganghöhe zum Umfang der Grundfläche, also die Ganghöhe geteilt durch $\pi$ mal den Durchmesser der Helix. Der Steigungswinkel ist der Arkustangens der Steigung.

Im Sinne dieser Anmeldung ist eine Helix ein Gegenstand, bei dem sich ein Material mit im Wesentlichen konstantem Querschnitt entlang der mathematischen Kurve erstreckt, beispielsweise ein Stift aus Metall oder Kunststoff mit einem kreisförmigen oder rechteckigen Querschnitt.

Eine Helix ist einfach herzustellen, leicht, flexibel und robust gegen Druck senkrecht zur Längsachse. Durch die Wahl der Ganghöhe lässt sich einstellen, wie gross die Fläche ist durch welche das I<ühlfluid mit dem Leitergeflecht in Kontakt kommt, also wie effizient die Kühlung sein soll, und wie robust gegen Druck die Stützstruktur sein soll. Es ist möglich, dass eine Helix entlang ihrer Länge mehrere Ganghöhen hat. So kann eine Einzelleitung in Bereichen, die besonders überfahr gefährdet sind, eine Helix mit einer kleineren Ganghöhe aufweisen als in anderen Bereichen. Im Sinne einer einfachen Herstellung ist die Ganghöhe bevorzugt über die gesamte Länge konstant.

Bevorzugt ist die Steigung der Helix zwischen 0.1 und 0.3, besonders bevorzugt ist die Steigung in etwa gleich 0.2.

Eine Stützstruktur in der Form eines offenen Profils lässt sich ebenfalls leicht herstellen, beispielsweise durch Extrusion eines geeigneten Kunststoffs. Während eine Helix entlang ihrer Längsachse einen vergleichsweise grossen Kanal aufweist, können mit einem offenen Profil mehrere, kleinere I<änale realisiert werden oder das I<ühlfluid zum Fluss in einer Schraubenlinie gezwungen werden. Mit einem offenen Profil kann besser erreicht werden, dass die Kühlflüssigkeit sich durchmischt und nicht ein Teil quasi ohne Kontakt zur Leiteranordnung und ohne jede Wärmeaufnahme durch die Einzelleitung fliesst.

Ein Stern-Querschnitt soll eine Form darstellen, die eine Verbindungsfläche und davon radial ausgehend mehrere Rippen aufweist. Die Rippen sind untereinander nur über die Verbindungsfläche verbunden. Bei einem Stern-Querschnitt erster Art ist die Verbindungsfläche ein Kreis und die Rippen haben alle dieselbe Länge. Ausserdem sind die Rippen in gleichen Winkelabständen zueinander angeordnet. In diesem Fall gibt es so viele I<anäle wie es Rippen gibt und alle I<anäle haben den gleichen Querschnitt.

Bei einem Stern-Querschnitt zweiter Art kann die Verbindungsfläche beliebig sein, die Rippen können unterschiedliche Längen haben und in unterschiedlichen Winkelabständen zueinander angeordnet sein. Wiederum gibt es so viele I<anäle wie Rippen, aber ihr Querschnitt kann stark voneinander abweichen.

Die Verbindungsfläche und die Rippen können Hohlräume aufweisen. Dies spart Gewicht.

In einer Ausführungsform ist die Stützstruktur eine Helix aus Metall. Das Metall kann insbesondere Kupfer oder Stahl sein. Bei dem Stahl handelt es sich insbesondere um Chrom-Nickel-Stahl.

Die meisten Metalle lassen sich zu einer Helix formen und leiten Strom und können so einerseits die Stützfunktion der Stützstruktur übernehmen und andererseits einen Teil des Stromes leiten.

Ein Stahldraht lässt sich vergleichsweise einfach in die gewünschte Form bringen. Eine Helix aus Stahl ist flexibel und stabil. Ausserdem ist diese Stützstruktur vergleichsweise unempfindlich gegenüber Wärme, so dass eine Einzelleitung konstruiert werden kann, die beim Ausfall des Kühlmittels nicht oder erst nach längerer Zeit beschädigt wird. Chrom-Nickel-Stahl ist rostfrei und kann daher in einer wassergekühlten Einzelleitung eingesetzt werden.

Kupfer leitet den Strom gut. Eine Helix aus Kupfer kann daher selbst einen Teil des Stromes leiten. So kann etwas Material gespart werden, was das I<abel leichter macht. Neben Kupfer eignen sich auch Kupferlegierungen.

Auch Aluminium leitet Strom gut und kann zu einer Helix geformt werden.

Bevorzugt besteht die Helix aus demselben Material wie das Leitergeflecht.

In einer Ausführungsform sind die Leiter Drähte. Insbesondere haben diese Drähte einen runden Querschnitt. Bevorzugt bestehen die Leiter aus Kupfer. Besonders bevorzugt sind sie verzinnt.

Drähte sind vergleichsweise einfach herzustellen, ihre Eigenschaften sind gut bekannt und durch die Verwendung von vielen Drähten anstelle von grösseren Einheiten wie beispielsweise einzelnen Bändern, wird die Ausfallsicherheit verbessert: Der Riss eines einzelnen Drahtes kann durch alle anderen kompensiert werden und setzt sich nicht weiter fort.

Auch der runde Querschnitt lässt sich einfacher herstellen als andere Querschnitte. Bei der Verarbeitung der Drähte muss schliesslich nicht auf die Ausrichtung geachtet werden. Die entstehenden Freiräume zwischen den runden Drähten erlauben, dass das I<ühlfluid dort einfacher eindringt und fliesst.

Kupfer ist ein guter und üblicher Leiter, sowohl für Strom als auch für Wärme, und vergleichsweise dul<til. Silber weist eine noch bessere Leitfähigkeit auf, ist aber weniger wirtschaftlich. Aluminium ist ebenfalls ein guter Leiter, allerdings weniger gut als Kupfer. Dafür ist Aluminium weniger dicht als Kupfer. Mit Aluminiumleitern wäre das I<abel also leichter.

Das Verzinnen hat den Vorteil, dass die Drähte vor Korrosion geschützt sind. Auf das Verzinnen kann aber, je nach Wahl des Kühlfluids, auch verzichtet werden. Dies ist insbesondere der Fall, wenn das I<ühlfluid mit Zusätzen versehen ist, die einen Korrosionsschutz bilden. Unverzinnte Drähte können günstiger sein als verzinnte Drähte.

In einer Ausführungsform hat die konvexe Hülle der Stützstruktur einen Querschnitt mit einer Form, die entlang der Längsausdehnung der Stützstruktur im Wesentlichen gleich bleibt. Die Berührungspunkte der Stützstruktur mit ihrer konvexen Hülle bilden bei dieser Ausführungsform Stützstrul<turlinien. Der Winkel, unter dem zumindest einige der Drähte des Leitergeflechtes zumindest einige Stützstrul<turlinien kreuzen, beträgt zwischen 45° und 135°, bevorzugt zwischen 60° und 120°.

Die Stützstrul<turlinien stellen die Bereiche dar, wo das Leitergeflecht auf der Stützstruktur aufliegt, wenn es ihr so nah wie möglich kommt. Für die Bestimmung der Winkel soll angenommen werden, dass das Leitergeflecht der Stützstruktur so nah wie möglich kommt. Im Falle eines zylinderförmigen Leitergeflechts, heisst dass, dass es derart entlang seiner Längsachse gedehnt oder gestaucht wird, bis sein Innenradius dem Umkreisradius der konvexen Hülle der Stützstruktur entspricht.

Ein Eindringen der Leiter des Leitergeflechts in die I<anäle, die mit Hilfe der Stützstruktur gebildet werden, kann insbesondere dann vorkommen, wenn ein Leiter fast parallel zu seiner Auflagefläche verläuft. Die Leiter werden nun aber nicht nur durch die Stützstruktur sondern auch durch die anderen Leiter des Leitergeflechts in ihrer Position gehalten.

Ein Eindringen eines Teils des Leitergeflechts in einen der I<anäle ist insbesondere dann zu befürchten, wenn alle Leiter des Leitergeflechts die Auflageflächen der Stützstruktur in einem flachen Winkel schneiden. Daher ist es bevorzugt, wenn zumindest einige der Leiter die Auflageflächen, also die Stützstrul<turlinien in einem Winkel von mehr als 45° schneiden: so wird durch sie das gesamte Leitergeflecht stabilisiert und ein Durchstossen der Auflageflächen durch das Leitergeflecht ist auch bei Bewegung und unter Druck von aussen unwahrscheinlich.

Besonders bevorzugt kreuzen alle Drähte des Leitergeflechtes zumindest einige Stützstrul<turlinien in einem Winkel zwischen 45° und 135°, und besonders bevorzugt in einem Winkel zwischen 60° und 120°.

In dieser Ausführungsform ist es für jeden Draht des Leitergeflechts quasi ausgeschlossen, dass er in einen der I<anäle rutscht. Somit verteilen sich mögliche Belastungen auf alle Drähte des Leitergeflechtes. Die Einzelleitung wird nochmals robuster.

In einer Ausführungsform besteht das Leitergeflecht aus Gruppen von jeweils zueinander parallel verlaufenden Drähten. Diese Gruppen sind untereinander verflochten. Jede der Gruppen umfasst zwischen drei und acht Drähte, insbesondere sechs Drähte.

Ein solches Leitergeflecht lässt sich, verglichen mit einem Geflecht einzelner Drähte, einfacher herstellen. Ausserdem verhindern die Gruppen, dass einzelne ihrer Mitglieder beim Flechten abknicken. Es entstehen grössere Freiräume zwischen den verflochtenen Gruppen und durch diese kann das I<ühlfluid fliessen.

Durch die Anzahl Drähte in einer Gruppe lässt sich die Längenskala der Oberflächenstruktur des Leitergeflechts beeinflussen.

In einer Ausführungsform ist die Stützstruktur ein offenes Profil, dessen Querschnitt in seiner Form und Grösse entlang der Längsausdehnung konstant bleibt, sich diese Form aber entlang der Längsausdehnung um eine Längsachse verdreht.

Ein solches Profil wird im Folgenden auch als verdrillt bezeichnet. Durch das Verdrehen entstehen Helix-förmige I<anäle. Ein Kühlfluid, welches durch diese I<anäle fliesst, bekommt somit einen Drall versetzt. Nahe bei der Längsachse ist der Weg kürzer als aussen. Es gibt also unterschiedliche Geschwindigkeiten im Fluid im I<anal und daraus resultierend eine stärkere Durchmischung des Kühlfluids. Das gesamte Volumen des Kühlfluids kann somit besser genutzt werden.

Ein erfindungsgemässes Ladekabel umfasst eine erste und eine zweite erfindungsgemässe Einzelleitung und einen gemeinsamen Schutzmantel.

Der gemeinsame Schutzmantel hält die beiden Einzelleitungen zusammen und schützt sie vor Abrieb und Umwelteinflüssen wie UV-Strahlung, Treibstoffresten, Scherben und ähnlichem. Der Schutzmantel kann mehrschichtig ausgebildet sein und dabei einzelne Schichten in unterschiedlicher Färbung beinhalten, so dass ein kritischer Abrieb einfach erkannt werden kann. Der Schutzmantel kann mit dünnen Prüfleitungen durchzogen sein, mit deren Hilfe eine übermässige Wärme und/oder eine Beschädigung des I<abels erkennt werden kann, beispielsweise durch einen Anstieg des elektrischen Widerstand in diesen Prüfleitungen. Der Schutzmantel kann stellenweise oder insgesamt verstärkt werden oder zur besseren Greifbarkeit mit Strukturen oder Beschichtungen versehen sein. Der Schutzmantel kann ausserdem Wärmeisolierend sein, um beispielsweise ein Einfrieren des Kühlfluids, insbesondere wenn Wasser genutzt wird, bei tiefen Aussentemperaturen zu verhindern und insbesondere auch, um während des Gebrauchs die endstehende Wärme primär über das I<ühlfluid abzuleiten und eine übermässige Erhitzung der Aussenseite des Schutzmantels zu verhindern.

In einer Ausführungsform umhüllt der gemeinsame Schutzmantel die Einzelleitungen nur abschnittsweise, beispielsweise in regelmässigen Abständen und/oder dort wo besondere Belastungen befürchtet werden. Bevorzugt umhüllt der gemeinsame Schutzmantel die erste und die zweite erfindungsgemässe Einzelleitung im Wesentlichen auf ihrer gesamten Länge.

Bevorzugt sind die erste und die zweite erfindungsgemässe Einzelleitung gleich aufgebaut und unterscheiden sich, wenn überhaupt, nur in der Färbung ihrer Isolierung. In einer anderen Ausführungsform unterscheiden sich die erste und die zweite erfindungsgemässe Einzelleitung in ihrer Stützstruktur, in der Gestaltung der Leiteranordnung und/oder in ihrer Abmessung.

In einer Ausführungsform umfasst ein Ladekabel weiter ein Neutralleitergeflecht, das die erste und die zweite Einzelleitung umgibt und vom gemeinsamen Schutzmantel umhüllt ist oder in diesen integriert ist.

Dieses Neutralleitergeflecht, für welches es dieselben Gestaltungsmöglichkeiten gibt, wie für das Leitergeflecht der Einzelleitungen, kann als Neutralleiter und/oder Abschirmung dienen, je nach Betriebsart des Ladekabels. Ausserdem kann es dazu dienen, eine Beschädigung des I<abels oder ein Überhitzen festzustellen.

Ist das Neutralleitergeflecht in den Schutzmantel integriert, so befindet sich Material des Schutzmantels unter- und oberhalb des Neutralleitergeflechts. So ist das Neutralleitergeflecht geschützt und kann dazu verwendet werden, Beschädigungen des I<abels oder eine hohe Manteltemperatur festzustellen.

Liegt das Neutralleitergeflecht hingegen innerhalb des vom Schutzmantel definierten Hohlraumes aber ausserhalb vom Schutzmantel selbst, so ist es flexibler.

Das Neutralleitergeflecht kann ausserdem auf der Innenseite des Schutzmantels befestigt sein.

In einer Ausführungsform umfasst ein Ladekabel mindestens einen Schlauch, bevorzugt zwei, drei oder vier Schläuche, aus einem fluiddichten Material. Die Schläuche befinden sich innerhalb des gemeinsamen Schutzmantels, aber ausserhalb der ersten oder zweiten Einzelleitung.

Die Schläuche dienen dazu I<ühlfluid ausserhalb der Einzelleitungen zu transportieren.

Als Material für Schläuche eignen sich unter anderem Polyurethan (PUR), EPDM, Nylon, Polyamide und Silikone. Das Material sollte für das verwendete I<ühlfluid geeignet sein, flexibel sein und einem hohen Innendruck standhalten können.

In einer ersten Ausführungsform wird das I<ühlfluid durch die Einzelleitungen gepumpt und tritt am Ende des I<abels aus und wir entsorgt. Dieses Vorgehen bietet sich beispielsweise mit Luft als I<ühlfluid an.

In einer anderen Ausführungsform wird das I<ühlfluid durch die erste Einzelleitung hin und durch die zweite Einzelleitung zurück transportiert.

In einer weiteren Ausführungsform wird das I<ühlfluid durch beide Einzelleitungen hin und durch ein oder zwei Schläuche zurück transportiert.

In einer weiteren Ausführungsform umfasst das I<abel zusätzlich zwei Schläuche, die die Hin- und Rückleitung zu einer Stecl<erl<ühlung darstellen.

In einer weiteren Ausführungsform umfasst das I<abel zwei Schläuche, von denen einer die Hinleitung zu einer Stecl<erl<ühlung darstellt und der andere die Rückleitung für I<ühlfluid aus der Stecl<erl<ühlung und aus den beiden Einzelleitungen darstellt.

Unter einer Hinleitung ist hier eine I<anal oder ein Schlauch zu verstehen, der von einer Pumpe oder einem Ort mit hohem Fluiddruck weg führt. Unter einer Rückleitung ist hier ein I<anal oder ein Schlauch zu verstehen, der zu einer Pumpe oder einem Ort mit tiefem Fluiddruck hin führt. Bevorzugt wechselt die Zuordnung, was zur Hin- und was zur Rückleitung gehört auf halben Weg des I<ühlfluids vom Ausgang der Pumpe zurück zu ihrem Eingang oder auf halben Weg vom Ort des hohen Fluiddrucks zum Ort des tieferen Fluiddrucks. Der hohe Fluiddruck ist hier ein Druck der höher ist als der tiefe Fluiddruck.

Die Schläuche können unterschiedlich grosse Durchmesser haben. Der Durchmesser der Schläuche wird gewählt in Abhängigkeit der Platzverhältnisse und der gewünschten Geschwindigkeit des Fluids bei der gewünschten Durchflussrate.

Der oder die Schläuche können einen runden oder einen nicht-runden Querschnitt haben. Schläuche mit rundem Querschnitt sind einfacher herzustellen und in einer grossen Vielfalt erhältlich. Schläuche mit nicht rundem Querschnitt können hingegen die Platzverhältnisse im Ladekabel optimal ausnutzen.

In einer Ausführungsform liegen die Einzelleitungen in einem Schlauch. In dieser Ausführungsform kann der gemeinsame Schutzmantel den Schlauch darstellen.

Ein Schlauch, im Sinne dieser Erfindung, ist dafür vorgesehen, I<ühlfluid zu transportieren. Seine Enden sind daher insbesondere fluiddicht anschliessbar und er besteht aus fluiddichtem Material. Bevorzugt ist das Schlauchinnere frei, abgesehen vom Kühlfluid.

In einer Ausführungsform umfasst das Ladekabel eine Neutralleiter, bevorzugt aus verdrillten Drähten und unmittelbar umhüllt von einer elektrisch isolierenden Neutralleiterisolierung. Der Neutralleiter ist innerhalb des gemeinsamen Schutzmantels angeordnet.

Ein solcher Neutralleiter kann ein übliches Stromkabel sein. Ein Ladekabel welches den Neutralleiter auf diese Art integriert ist besonders einfach herstellbar und kostengünstig.

Bevorzugt liegt der Neutralleiter ausserhalb der Einzelleitungen. Bevorzugt liegt der Neutralleiter ausserhalb eines Schlauches.

In einer Ausführungsform umfasst ein Ladekabel ein oder mehrere Signalkabel, die bevorzugt in einer gemeinsamen Hülle angeordnet sind. Die Signalkabel sind, bevorzugt in der gemeinsamen Hülle, innerhalb des gemeinsamen Schutzmantels angeordnet. Jedes Signalkabel weist einen Signalleiter und eine Schutzschicht auf. Die Schutzschicht umhüllt den Signalleiter. Bei mindestens einem der Signalkabel besteht der Signalleiter aus Leitern in Form von Drähten. Der Leiterquerschnitt des Signalleiters ist kleiner als 1/20, bevorzugt kleiner als 1/40 des Leiterquerschnitts der ersten Einzelleitung. Die Schutzschicht ist elektrisch isolierend.

Typischerweise gibt es mehrere Signalkabel. Durch das Zusammenfassen in einer gemeinsamen Hülle werden der Aufbau und das Anschliessen des Ladekabels vereinfacht, da alle Signalkabel räumlich dicht beieinander liegen. Neben Signalleitern aus Leitern können Signalleiter aus Glasfasern genutzt werden.

Signalleiter aus Leitern sollen wesentlich weniger Leistung übertragen als die Einzelleitungen. Daher ist ihr Leiterquerschnitt deutlich geringer.

In einer Ausführungsform umfasst ein Ladekabel ein oder mehrere der folgenden Bestandteile: Neutralleiter, umhüllte Signalkabel, Schlauch, Beilauf.

Jeder dieser Bestandteile weist einen im Wesentlichen kreisförmigen Querschnitt auf und dieser Querschnitt hat einen Umkreisradius.

Die erste und die zweite Einzelleitung haben jeweils einen runden Querschnitt und die Querschnitte der ersten und der zweiten Einzelleitung haben den gleichen Umkreisradius R.

Der Umkreisradius von jedem der vorkommenden Bestandteile ist kleiner oder gleich als 2/3 des Umkreisradius R der ersten Einzelleitung.

Der Umkreisradius der vorkommenden Bestandteile ist insbesondere im Wesentlichen gleich 1/3 oder 2/3 des Umkreisradius R der ersten Einzelleitung. Es gibt insbesondere nicht mehr als zwei Bestandteile mit einem Umkreisradius von 2/3 des Umkreisradius R der ersten Einzelleitung und nicht mehr als vier Bestandteile mit einem Umkreisradius von 1/3 des Umkreisradius R der ersten Einzelleitung in einem Ladekabel.

Der Beilauf besteht aus verdrillten oder parallel verlaufenden Fasern oder Streifen und hat die Funktion, das I<abel in Form zu halten und ist im Wesentlichen ein Füllstoff. Der Beilauf kann aber auch dazu genutzt werden, mechanische Zugkräfte auf das I<abel aufzunehmen. Er dient also unter anderem der Überrollfestigl<eit. Der Beilauf besteht insbesondere aus einem günstigen thermoplastischen Material, welches keine Halogene aufweist. Beispiele für solche Materialien sind Polypropylen und Polyethylen.

Gemäss dieser Ausführungsform bestimmen die Einzelleitungen den Umfang des Ladekabels. Wobei das vorliegende Ladekabel einen runden Querschnitt hat. Alle weiteren Bestandteile teilen sich den Platz, der sich innerhalb des Umkreises um die beiden Einzelleitungen ergibt. Diese Ausführungsform hat den Vorteil, dass die vergleichsweise stabilen Einzelleitungen das gesamte Kabel gegen Druckbelastung in zumindest eine Richtung stützen. Durch die optimale Raumnutzung ist der Umfang des Kabels so klein wie möglich, was seine Greifbarkeit verbessert.

Ein erstes erfindungsgemässes Ladesystem umfasst ein erfindungsgemässes Ladekabel, einen Endanschluss und einen Stecker. Der Endanschluss umfasst eine Fluidzuführung, welche Fluid in zumindest den Kanal der ersten Einzelleitung einführt und Fluid aus dem Kanal der zweiten Einzelleitung und/oder aus mindestens einem Schlauch aufnimmt. Der Stecker umfasst eine Fluidrückführung, welche das Fluid aus zumindest dem Kanal der ersten Einzelleitung aufnimmt und zu dem Kanal der zweiten Einzelleitung und/oder zu mindestens einem Schlauch führt.

In einer Ausführungsform umfasst der Endanschluss eine Fluidzuführung, welche Fluid in den Kanal der ersten Einzelleitung einführt und Fluid aus dem Kanal der zweiten Einzelleitung aufnimmt. Der Stecker umfasst eine Fluidrückführung, welche das Fluid aus dem Kanal der ersten Einzelleitung aufnimmt und zu dem Kanal der zweiten Einzelleitung führt.

Der Endanschluss kann ein Adapterteil für den Anschluss an eine Ladestation mit integrierter Pumpe und Stromversorgung sein oder diese Ladestation selbst. Die Versorgung mit Strom kann auch ausserhalb des Endanschlusses geschehen, da der Endanschluss im einfachsten Fall eine Pumpe oder einen Anschluss an eine Leitung darstellt. Im Endanschluss oder diesem vorgelagert kann eine Kühlvorrichtung oder eine Aufarbeitungsvorrichtung angeschlossen sein, die das Kühlfluid kühlt und/oder aufbereitet. Aufbereiten kann bedeuten, dass das Kühlfluid gefiltert oder mit Zusätzen versehen wird. Durch die Montage am Endanschluss kann das Ladekabel an einem geographischen Ort befestigt sein.

Durch die Kühlung des Kühlfluids lässt sich die Temperatur der Leiteranordnung der Einzelleitungen noch weiter senken oder noch stärker kühlen. Auf diese Art kann mehr Strom mit dem Kabel übertragen werden, als in dem Fall einer Kühlung mit Kühlfluid mit der Umgebungstemperatur. Das Kabel lässt sich somit über einen breiten Bereich an Übertragungsströmen nutzen, wobei einfach eine vorgeschaltete Kühlmittelkühlung an die jeweils gefragten Bedingungen angepasst werden muss. Im günstigsten Fall muss daher bei einer Erhöhung des gewünschten Ladestroms einfach die Steuerung eines Ladesystems angepasst werden, ohne dass ein Austausch von Geräten oder Ladekabeln notwendig ist.

Eine Kühlung ermöglicht ausserdem, das aus dem Ladekabel austretende Kühlfluid rasch wieder auf seine Ausgangstemperatur zu bringen und es so wieder in das Ladekabel einbringen zu können. Das benötigte Volumen des Kühlfluids in einem geschlossenen Kühlfluidkreislauf ist mit einer Kühlung deutlich kleiner, als wenn gewartet wird, bis die aufgenommene Wärme ohne weitere Hilfe an die Umgebung abgegeben wird. Die Abgabe von Wärme an die Umgebung kann durch eine geeignete Gestaltung eines Kühlfluidtanks gefördert werden, wenn dies gewünscht ist.

Der Stecker wird am anderen Ende des Ladekabels montiert. Der Stecker erlaubt es, eine werkzeuglos-herstellbare elektrische Verbindung zu dem zu ladenden Energiespeicher herzustellen. Der Kühlfluidkreislauf tritt bevorzugt nur durch das Ladekabel in den Stecker ein und wieder aus ihm hinaus.

Das Kühlfluidsystem umfassend Endverbindung, Ladekabel und Stecker lässt sich somit auf seine Dichte testen, ohne dass ein Energiespeicher angeschlossen sein muss.

Bevorzugt handelt es sich bei dem Energiespeicher um die Antriebsbatterie eines Fahrzeugs. Es können aber auch anders eingesetzte Akkumulatoren oder Batterien mit dem Ladekabel und/oder dem Ladesystem geladen werden. Auch können andere Energiespeicher, beispielsweise Schwungräder oder Kondensatoren, mit dem Ladekabel und/oder dem Ladesystem geladen werden.

Wird das Kühlfluid in der ersten Einzelleitung vom Endanschluss zum Stecker geleitet und in der zweiten Einzelleitung vom Stecker zum Endanschluss, so kann das Ladekabel besonders kompakt gebaut sein.

In einer Ausführungsform umfasst der Endanschluss eine Fluidzuführung, welche Fluid in die Kanäle der ersten und der zweiten Einzelleitung einführt und Fluid aus mindestens einem Schlauch des Ladekabels aufnimmt und der Stecker umfasst eine Fluidrückführung, welche das Fluid aus den Kanälen der ersten und der zweiten Einzelleitung aufnimmt und zu dem mindestens einen Schlauch führt.

Diese Ausführungsform hat den Vorteil, dass beide Einzelleitungen mit Kühlfluid der gleichen Temperatur durchflossen werden und damit gleich stark belastet werden.

Ob ein oder mehrere Schläuche verwendet werden um das Kühlfluid von dem Stecker zum Endanschluss zu bringen, kann je nach Aufbau des Kabels gewählt werden. Bevorzugt ist der Einsatz von einem Schlauch zur Rückführung des Kühlfluids aus beiden Einzelleitungen, da so einerseits der Aufwand bei der Montage sinkt und andererseits der Strömungswiderstand geringer ist.

In einer Ausführungsform umfasst ein Ladesystem ein Ladekabel mit mindestens zwei Schläuchen zur Versorgung einer Steckerkühlung und einen Stecker mit einer Steckerkühlung. Die Steckerkühlung umfasst mindestens eine Kühlleitung. In die Kühlleitung kann aus einem der mindestens zwei Schläuche zur Versorgung der Steckerkühlung Kühlfluid eingebracht werden. Das Kühlfluid kann durch einen anderen der mindestens zwei Schläuche wieder abfliessen.

Grosse Wärme entsteht vor allem dort, wo der elektrische Widerstand hoch ist. Dies ist oft an Kontaktflächen und bei Verbindungsstellen der Fall, also gerade im Bereich des Steckers. Teile des Steckers sollten aber für den Benutzer anfassbar bleiben und somit eine Oberflächentemperatur von weniger als 40°C aufweisen. Andere Teile, insbesondere Verbindungsstellen der Leiter, können durch zu hohe Temperaturen I<aputt gehen. Um dies zu verhindern, bietet sich die Nutzung einer Stecl<erl<ühlung an. Diese kann entweder das I<ühlfluid der Einzelleitungen nutzen, oder aber eigene I<ühlfluidversorgungsleitungen aufweisen. Die Nutzung des Kühlfluids der Einzelleitungen in der Stecl<erl<ühlung erlaubt eine kompakte Bauweise des I<abels, da keine weiteren Schläuche benötigt werden. Soll mit der Stecl<erl<ühlung aber primär die Oberflächentemperatur gesenkt werden, damit der Nutzer den Stecker anfassen kann, so ist die Versorgung der Stecl<erl<ühlung durch zwei Schläuche effizienter: Für die Oberflächentemperatur von Ladekabel und Stecker gilt bevorzugt der gleiche Sollwert. Die Durchflussrate des Kühlfluids kann nun gerade so gewählt werden, dass dieser Sollwert am Ende des I<abels erreicht wird. Im Allgemeinen kann mit einem derart aufgewärmten I<ühlfluid nun aber nicht auch noch der Stecker auf den Sollwert gesenkt werden. Stattdessen müssten die I<abel, in der Variante ohne Schläuche zur Versorgung der Stecl<erl<ühlung, stärker als gewünscht gekühlt werden, um den Stecker auf der Solltemperatur zu halten. Diese stärkere I<ühlung bedeutet eine höhere Durchflussrate und damit höhere Fluidgeschwindigl<eiten und/oder breitere I<anäle. Höhere Fluidgeschwindigl<eiten und damit höhere Drücke machen das Ladekabel weniger flexibel; Breitere I<anäle machen das Ladekabel weniger handlich. Letztendlich kann für einen Sollstrom, eine gewünschte höchste Oberflächentemperatur, ein Länge des I<abels und ein gegebenes Stecl<erdesign berechnet werden, ob eine Kühlung des Steckers über das I<ühlfluid der Einzelleitungen oder über Versorgungsschläuche im konkreten Fall das kompaktere Ladekabel mit ausreichender Flexibilität ergibt.

Ein erfindungsgemässes Verfahren zum Laden eines Energiespeichers, insbesondere einer Batterie eines Fahrzeugs, an einer stationäre Ladestation, die I<ühlfluid und elektrische Energie zur Verfügung stellen kann und an welche ein erstes Ende eines erfindungsgemässen Ladekabels angeschlossen ist, umfasst die folgenden Schritte:
Anschliessen eines zweiten Endes des Ladekabels an den Energiespeicher, insbesondere an die Batterie des Fahrzeuges.

Einbringen eines Kühlfluids unter Druck, insbesondere Pumpen des Kühlfluids, in die I<anäle der Einzelleitungen des Ladekabels.

Übertragen von elektrischer Energie über das Leitergeflecht und gegebenenfalls die Leiter der Einzelleitungen des Ladekabels.

Dabei werden insbesondere Signalkabel des Ladekabels zur Übertragung von Signalen zur Steuerung und/oder Überwachung des Ladevorganges und/oder des Ladezustands des Energiespeichers, insbesondere der Batterie, genutzt.

In einer Ausführungsform umfasst das Verfahren ausserdem das I<ühlen des Kühlfluids bevor es in die I<anäle der Einzelleitungen des Ladekabels eingebracht wird.

Durch die Nutzung von gekühltem I<ühlfluid können noch höhere Ströme mit dem Ladekabel übertragen werden und das Ladeverfahren wird unabhängig von der Temperatur mit der das I<ühlfluid zur Verfügung gestellt wird.

Bei dem Energiespeicher des Fahrzeuges handelt es sich insbesondere um eine Batterie zum Antrieb des Fahrzeuges. Das Anschliessen des Ladekabels an die Batterie des Fahrzeuges geschieht bevorzugt durch einen Stecker, der am Ladekabel montiert ist und eine Steckdose, die am Fahrzeug montiert ist und mit der Batterie verbunden ist. Der Stecker kann beim Anschliessen in die Steckdose gesteckt werden.

Das Einbringen des Kühlfluids unter Druck geschieht bevorzugt durch eine lokal an oder in der Ladestation angebrachte Pumpe. Es ist aber auch möglich, dass die Ladestation an einen Tank oder eine Leitung angeschlossen ist, die I<ühlfluid mit einem bestimmten Druck zur Verfügung stellt. Beispielweise ist eine Versorgung mit dem I<ühlfluid Wasser und einem Wasserturm denkbar, wobei das Wasser zeitlich und räumlich von der Ladestation und dem Ladevorgang getrennt, in ein höher gelegenes Reservoir gepumpt wird.

Die Signalkabel können eine Kommunikation zwischen Fahrzeug und Ladestation herstellen. So kann die Ladestation beispielsweise bei Fehlermeldungen den Stromfluss unterbrechen oder vor Beginn des Ladens den korrekten Anschluss des Ladekabels an die Batterie des Fahrzeuges prüfen. Die Signalkabel können aber auch zur Überwachung des Ladekabels selbst dienen, indem sie Sensorsignale von Sensoren im Stecker oder von Sensoren im I<abel zur Ladestation leiten. Stellt ein Sensor beispielsweise eine Temperatur oberhalb einer bestimmten Schwelle fest, so kann die Ladestation den Kühlfluidfluss erhöhen oder den Ladevorgang unterbrechen.

Als Kühlfluid kann Umgebungsluft, Wasser, Öl, insbesondere Transformatorenöl, oder Esterflüssigl<eit eingesetzt werden. Wasser wird bevorzugt mit Zusätzen versehen, um einen Korrosionsschutz zu haben, den Gefrierpunkt zu senken oder die Wärmekapazität zu erhöhen.

Ein bevorzugtes I<ühlfluid ist eine Mischung aus destilliertem Wasser mit Propylenglykol und gegebenenfalls weiteren Zusätzen für Korrosionsschutz und für elektrische Isolierung. Diese Mischung hat eine hohe Wärmekapazität und eine geringe Viskosität.

Wasser hat den Vorteil, dass es eine hohe Wärmekapazität hat, ungiftig und leicht erhältlich ist. Durch Zusätze kann sein Gefrierpunkt gesenkt werden und andere seiner Eigenschaften beeinflusst werden. So kann das Wasser auch mit einem Korrosionsschutz versetzt werden oder durch Zusätze seine Wärmekapazität erhöht werden.

Transformatorenöl und Esterflüssigl<eiten, wie gesättigte Pentaerythrittetrafettsäureester, sind aus der Anwendung bei Transformatoren bekannt, wo sie ebenfalls zur I<ühlung von elektronischen Bauteilen eingesetzt werden.

Umgebungsluft hat den Vorteil, dass sie stets zur Verfügung steht und kein Speicher benötigt wird.

Neben dem I<ühlfluid kann die Kühlleistung auch durch eine Durchflussmenge beeinflusst werden.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1a    Eine runde Einzelleitung mit einer Helix als Stützstruktur und verdrillten Leitern auf dem Leitergeflecht.

Fig. 1b    Eine runde Einzelleitung mit einem offenen Profil als Stützstruktur und mehreren Leitergeflechten.

Fig. 1c    Eine sektorförmige Einzelleitung mit einem offenen Profil als Stützstruktur.

Fig. 2    Verteilung des Kühlfluids in der runden Einzelleitung von Fig.1a

Fig. 3a    Ein offenes Profil

Fig.3b    Ein verdrilltes offenes Profil

Fig.3c    Eine Helix mit veränderlicher Ganghöhe

Fig. 4a    Ein Gewebe mit Gruppen parallel verlaufender Leiter

Fig. 4b    Ein Geflecht mit Gruppen parallel verlaufender Leiter

Fig. 5    Helix als Stützstruktur mit aufliegendem Leitergeflecht

Fig.6a    Ein Ladekabel mit zwei Einzelleitungen

Fig. 6b    Ein Ladekabel mit vier Einzelleitungen

Fig. 6c    Ein Ladekabel mit zwei Einzelleitungen, Neutralleiter, Schläuchen und Signalkabeln

Fig. 6d    Ein Ladekabel mit zwei Einzelleitungen, Schläuchen, Beilauf, Signalkabeln und einem Neutralleitergeflecht

Fig. 7    Ein Ladesystem

Fig.8    Ein Stecker mit Stecl<erl<ühlung

Grundsätzlich sind in den Figuren gleiche Teile mit gleichen Bezugzeichen versehen.

**Wege zur Ausführung der Erfindung**

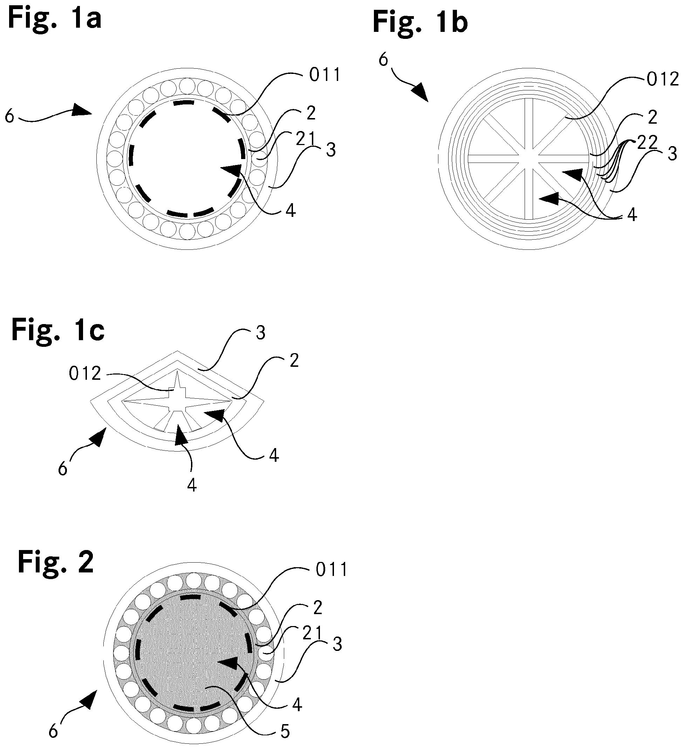

Figur 1a zeigt einen Querschnitt durch eine runde Einzelleitung 6 mit einer Helix 011 als Stützstruktur und verdrillten Leitern 21 auf dem Leitergeflecht 2, welches die Helix 011 unmittelbar umhüllt. Die verdrillten Leiter 21 liegen auf dem Leitergeflecht 2. Leitergeflecht 2 und verdrillte Leiter 21 sind in elektrischen Kontakt zueinander und leiten gemeinsam den Strom, der durch die Einzelleitung 6 fliesst. Die verdrillten Leiter 21 sind unmittelbar von einer Isolierung 3 umhüllt. Im Inneren der Helix 011 befindet sich der Kanal 4, der durch die Helix 011 und das Leitergeflecht 2 begrenzt wird. Diese Begrenzung ist allerdings nicht I<ühlfluiddicht, so dass sich das I<ühlfluid 5 in radialer Richtung bis zur Isolierung 3 hin ausbreiten kann.

Figur 1b zeigt einen Querschnitt durch eine runde Einzelleitung 6 mit einem offenen Profil 012 als Stützstruktur und mehreren Lagen von Leitern 22 die als Geflecht angeordnet sind auf dem Leitergeflecht 2. Die Leiter 22, die als Geflecht angeordnet sind, und das Leitergeflecht 2 sind in elektrischen Kontakt miteinander und leiten gemeinsam den Strom, der durch die Einzelleitung 6 fliesst. Die Leiter 22, die als Geflecht angeordnet sind, werden unmittelbar von einer Isolierung 3 umhüllt. Die Stützstruktur hat im Querschnitt die Form eines Sterns mit einer runden Verbindungsfläche und sechs, gleichmässig um die Verbindungsfläche herum angeordneten Rippen. Es handelt sich also um einen Stern-Querschnitt erster Art. Es gibt insgesamt sechs gleich grosse Kanäle 4, die durch das offene Profil 012 und das Leitergeflecht 2 begrenzt werden, wobei auch in diesem Fall das Leitergeflecht 2 für das Kühlfluid 5 durchlässig sein soll. Das I<ühlfluid 5 kann sich somit bis zur Isolierung 3 hin ausbreiten.

Figur 1c zeigt einen Querschnitt durch eine Einzelleitung 6. Diese Einzelleitung 6 hat die Form eines Kreissektors. Im Zentrum befindet sich auch hier ein offenes Profil 012 als Stützstruktur. Diese Verbindungsfläche ist in diesem Fall ein Rechteck. Es gibt fünf Rippen, die teilweise einen dreieckigen Querschnitt haben und teilweise einen rautenförmigen. Die Länge der Rippen ist unterschiedlich. Die Anordnung ist spiegelsymmetrisch um die Symmetrieachse des Kreissektors. Es handelt sich also um einen Stern-Querschnitt zweiter Art. Das offene Profil 012 ist unmittelbar umgeben vom Leitergeflecht 2 und dieses wiederum von der Isolierung 3. Der gesamte Strom, den diese Einzelleitung 6 leitet, fliesst durch das Leitergeflecht 2.

Figur 2 zeigt die Verteilung des Kühlfluids 5 in der Einzelleitung von Fig.1a. Das I<ühlfluid 5 ist in grau dargestellt. Es verteilt sich ausgehend vom I<anal 4 durch das Leitergeflecht 2 zwischen die Leiter 21 bis zur Isolierung 3. Die Isolierung 3 ist fluiddicht. Das Leitergeflecht 2 besteht aus vielen Leitern und lässt Freiräume zwischen zumindest einen Teil dieser Leitern. Die Leiter 21, 22 selbst sind in der Regel fluidundurchlässig, aber in den Freiräumen verteilt sich das Fluid. Schliesslich erreicht es die gezeigte Verteilung, in der im Wesentlichen alle Leiter 21, 22 über einen Grossteil ihrer Oberfläche mit den Fluid in Kontakt sind.

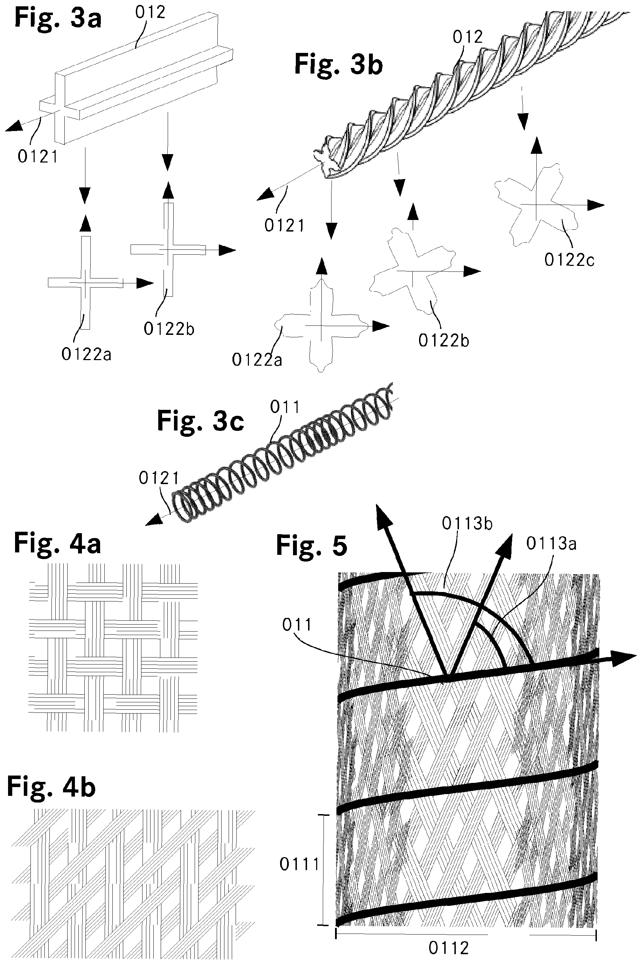

Figur 3a zeigt ein offenes Profil 012 mit einem Stern-Querschnitt zweiter Art mit einer runden Verbindungsfläche und vier Rippen, die in gleichmässigen Winkelabständen verteilt sind, aber unterschiedliche Längen haben. Das offene Profil 012 hat eine Längsachse 0121. Querschnitte entlang dieser Längsachse 0122a, b, c sind immer gleich und haben die Form eines aufrechtstehenden Kreuzes, wobei die horizontale Ausdehnung stets kleiner ist als die vertikale.

Figur 3b zeigt ein offenes Profil 012 mit einem Stern-Querschnitt erster Art mit einer runden Verbindungsfläche und vier Rippen, die in gleichmässigen Winkelabständen verteilt sind und gleiche Längen haben. Das offene Profil 012 hat eine Längsachse 0121. Querschnitte entlang dieser Längsachse 0122a, b, c sind zwar von der Form her immer gleich, sind aber gegeneinander verdreht. Die Form der Querschnitte ist ein Kreuz mit in etwa dreieckigen Rippen, wobei die Höhe der Dreiecke gleich ist. Es handelt sich hier um ein Beispiel eines verdrillten offenen Profils.

Figur 3c zeigt eine Helix 011 mit Abschnitten unterschiedlicher Ganghöhe 0111. Diese Helix 011 ist aus rundem Draht gefertigt. Auch die Helix 011 hat eine Längsachse 0121.

Figur 4a zeigt ein Beispiel eines Gewebes, was im Sinne dieser Anmeldung ein Sonderfall eines Geflechts darstellen soll. Gruppen von je fünf Leitern verlaufen parallel zueinander und werden gemeinsam verwebt. Es gibt horizontal und vertikal verlaufende Gruppen. Die horizontal und die vertikal verlaufenden Gruppen schneiden sich im 90° Winkel. Eine Gruppe passiert die 90° zu ihr verlaufenden Gruppen immer abwechselnd oberhalb und unterhalb.

Figur 4b zeigt ein Beispiel eines Geflechts. Auch hier verlaufen Gruppen von je fünf Leitern parallel zueinander und werden gemeinsam verflochten. Es gibt vertikal und schräg verlaufende Gruppen. Die vertikal und die schräg verlaufenden Gruppen schneiden sich in einen Winkel von ungleich 90°, im Fall von Figur 4b im 45° Winkel. Jede der schräg verlaufenden Gruppen schneidet je zwei vertikal verlaufende Gruppen oberhalb und anschliessend zwei vertikal verlaufende Gruppen unterhalb. Jede der vertikal verlaufenden Gruppen schneidet je zwei schräg verlaufende Gruppen oberhalb und anschliessend zwei schräg verlaufende Gruppen unterhalb.

"Oberhalb" und "unterhalb schneiden" soll in diesem Zusammenhang bedeuten, dass die schneidende Gruppe oberhalb bzw. unterhalb der geschnittenen Gruppe im Bereich der Schnittstelle liegt. "Schneiden" soll hier gleichbedeutend mit "kreuzen" sein.

Figur 5 zeigt eine Helix 011 mit konstanter Ganghöhe 0111 in der Seitenansicht. Zudem ist das die Helix 011 unmittelbar umhüllende Leitergeflecht 2 eingezeichnet. Die Ganghöhe 0111 lässt sich in diese Ansicht einfach erkennen, indem beispielsweise der Abstand zwischen zwei Punkten, bei denen die Helix 011 im Blickfeld auftaucht, betrachtet wird. Hier ist die Ganghöhe 0111 eine Längeneinheit. Auch ist der Durchmesser 0112 des durch die Helix 011 definierten Zylinders in dieser Ansicht gleich der Breite des Rechtecks, als das der Zylinder in dieser Ansicht erscheint. Hier ist der Durchmesser 0112 gleich 2.3 Längeneinheiten.

Die konvexe Hülle der Helix 011 ist der Zylinder, der in der Seitenansicht gezeigt ist. Die Berührungspunkte der Stützstruktur, also der Helix 011, mit diesem Kreiszylinder, also ihrer konvexen Hülle, sind gerade die am weitesten von der Längsachse 0121 der Helix 011 entfernten Punkte der Helix 011. Die Stützstrul<turlinien gleichen daher im vorliegenden Fall, da die Ausdehnung des die Helix 011 definierenden Drahtes nicht dargestellt ist, gerade die Linien mit denen die Helix 011 in Figur 5 eingezeichnet ist.

Das Leitergeflecht 2 besteht im vorliegenden Fall aus Drähten die sich in zwei Klassen einteilen lassen. Alle Drähte einer Klasse liegen parallel zueinander. Es gibt also nur zwei Winkel 0113a, b zwischen den Stützstrul<turlinien und den Drähten des Geflechts.

Die Drähte des Geflechts verlaufen auf Schraubenlinien und haben jeweils eine Ganghöhe 0111 von 11.1 Längeneinheiten. Der Steigungswinkel ist arctan(Ganghöhe/($\pi$ Durchmesser))=arctan(11.1/(2.3 $\pi$))= 57° wobei die Wicklung einmal linksgängig und einmal rechtsgängig ist.

Die Helix 011 der Stützstruktur ist rechtsgängig und hat eine Ganghöhe 0111 von 1 und damit einen Steigungswinkel von arctan(1/(2.3*$\pi$))=8°.

Im gezeigten Beispiel kreuzen die Drähte im Leitergeflecht 2 die Stützstrul<turlinien also in einem Winkel 0113 von 57°- 8°=49° und von (180°-57°)-8°=115°.

Es gibt in dem gezeigten Fall also einige Drähte im Leitergeflecht 2, die die Stützstrul<turlinien in einem Winkel 0113 zwischen 60° und 120° kreuzen und alle Drähte im Leitergeflecht 2 kreuzen die Stützstruktur in einem Winkel 0113 zwischen 45° und 135°.

Zur Bestimmung des Winkels 0113 unter dem zumindest einige der Drähte des Leitergeflechts 2 zumindest einige der Stützstrul<turlinien kreuzen, soll also die abgewickelte Situation betrachtet werden. Ausserdem soll das Leitergeflecht 2 für die Bestimmung derart gestreckt sein, dass es die Stützstruktur tatsächlich berührt.

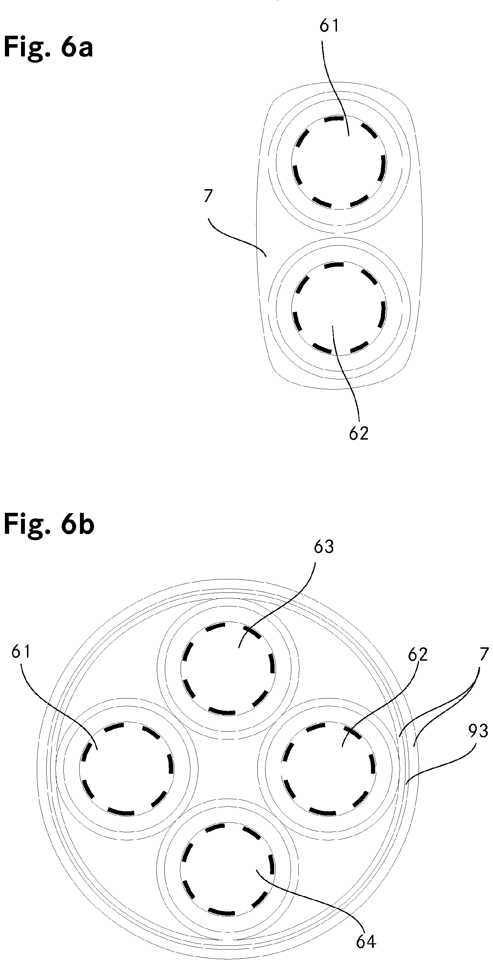

Figur 6a zeigt ein Ladekabel 12 mit zwei Einzelleitungen 61 und 62. Die erste und die zweite Einzelleitung 61 und 62 besitzen eine Helix 011 als Stützstruktur und haben beide einen runden Querschnitt und den gleichen Durchmesser. Die Einzelleitungen 61 und 62 sind nur schematisch dargestellt. Ob es hier nur das Leitergeflecht 2 gibt oder Leitergeflecht 2 und verdrillte Leiter 21 oder weitere Leiter 22 die als Geflechte angeordnet sind, ist hier offen gelassen. Alle Varianten sind möglich und die erste Einzelleitung 61 kann anders aufgebaut sein als die zweite Einzelleitung 62. Auch könnten sich die Einzelleitungen 61 und 62 in ihrem Durchmesser und/oder ihrer Form unterscheiden. Die beiden Einzelleitungen 61 und 62 liegen nebeneinander und innerhalb eines gemeinsamen Schutzmantels 7. Der Schutzmantel 7 hat hier den Querschnitt eines Rechtecks mit abgerundeten Ecken und etwas ausgebuchteten Seiten. Der Schutzmantel 7 füllt in diesem Fall den gesamten Raum zwischen seiner Oberfläche und den Einzelleitungen 61 und 62 aus.

Figur 6b zeigt ein weiteres Ladekabel 12. Dieses umfasst vier Einzelleitungen 61, 62, 63 und 64. Die vier Einzelleitungen 61, 62, 63 und 64 haben den gleichen Durchmesser und sind auf den Eckpunkten eines Quadrates angeordnet, welches eine Seitenlänge von einem Durchmesser einer Einzelleitung 6 hat. Die vier Einzelleitungen 61, 62, 63 und 64 sind von einem Schutzmantel 7 umgeben. Der Schutzmantel 7 hat die Form eines hohlen Kreiszylinders mit einem Innendurchmesser der gerade das $(1+\sqrt{(2)})$ fache des Durchmessers einer Einzelleitung 6 beträgt. Innerhalb des Schutzmantels 7, also im Bereich zwischen seinem Innen- und seinem Aussenradius, befindet sich ein Neutralleitergeflecht 93. Dieses Neutralleitergeflecht 93 ist ein Leitergeflecht und kann auf die gleiche Art und aus den gleichen Materialien gestaltet sein, wie das Leitergeflecht 2 der Einzelleitung 6. Es kann sowohl als Neutralleiter 9 dienen als auch als Schirm oder als Sensor für Defekte oder überhohe Temperaturen im Schutzmantel 7.

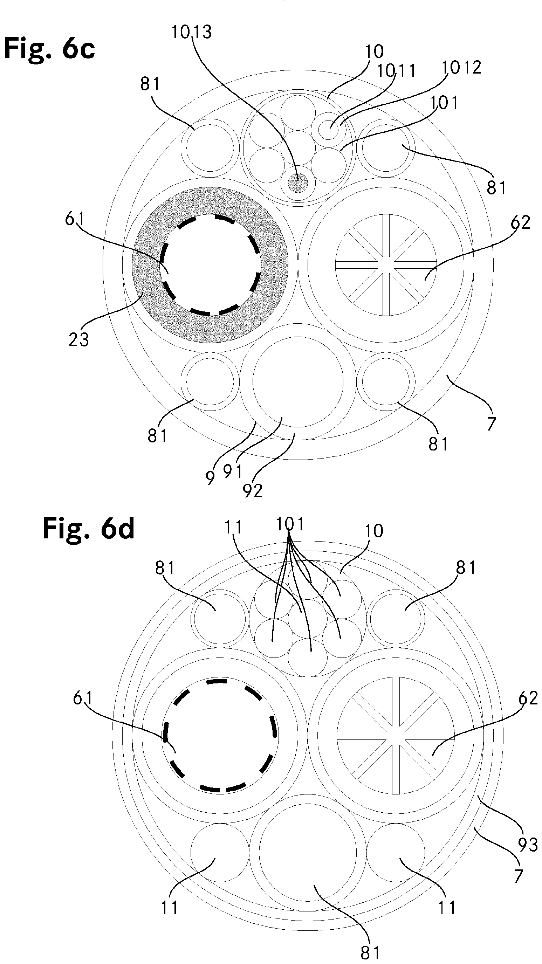

Figur 6c zeigt ein weiteres Ladekabel 12. Dieses umfasst eine erste und eine zweite Einzelleitung 61, 62, einen Neutralleiter 9, sieben Signalkabel 101 in einer gemeinsamen Hülle 10 und vier Schläuche 81. All dies ist von einem gemeinsamen Schutzmantel 7 umgeben. Der Schutzmantel 7 hat die Form eines runden Hohlzylinders mit einem Innendurchmesser, der dem Doppelten eines Einzelleitungs-Durchmessers entspricht. Die erste und zweite Einzelleitung 61, 62 haben beide einen runden Querschnitt und den gleichen Durchmesser. In der Stützstruktur unterscheiden sie sich: die erste Einzelleitung 61 nutzt eine Helix 011, während die zweite Einzelleitung 62 ein offenes Profil 012 nutzt.

Der Neutralleiter 9 hat ebenfalls einen runden Querschnitt. Er besteht aus Neutralleiterdrähten 91 und einer Neutralleiterisolation 92. Der Durchmesser des Neutralleiters 9 ist 2/3 des Durchmessers der ersten Einzelleitung 61.

Die Hülle 10 der umhüllten Signalkabel 101 hat ebenfalls einen Durchmesser von etwa 2/3 der ersten Einzelleitung 61. Im Querschnitt ist die Hülle 10 der umhüllten Signalkabel 101 kreisförmig. Jedes einzelne der Signalkabel 101 hat ebenfalls einen runden Querschnitt. Die Hülle 10 ist dünn. Zwei der abgebildeten Signalkabel 101 besteht aus einem Signalleiter 1011 der unmittelbar von einer Schutzschicht 1012 umgeben ist. Der Signalleiter 1011 hat einen Signalleiterquerschnitt 1013.

Der Leiterquerschnitt 23 der ersten Einzelleitung 61 ist ebenfalls eingezeichnet. Er umfasst sowohl den Leiterquerschnitt des Leitergeflechts 2 der Einzelleitung 61 als auch den Leiterquerschnitt möglicher weiterer, mit dem Leitergeflecht 2 in elektrischen Kontakt stehenden Leitern.

Der Leiterquerschnitt 23 der ersten Einzelleitung 61 ist mehr als 20-mal so gross wie der Signalleiterquerschnitt 1013.

Jeder der vier Schläuche 81 hat einen runden Querschnitt und einen Aussendurchmesser von etwa 1/3 des Durchmessers der ersten Einzelleitung 61.

Die erste und die zweite Einzelleitung 61, 62 sind nebeneinander angeordnet und berühren sich. Oberhalb des Berührungspunktes und in Kontakt mit beiden Einzelleitungen 61, 62 ist die Hülle 10 mit den von ihr umhüllten Signalkabeln 101 angeordnet. Unterhalb des Berührungspunktes und in Kontakt mit beiden Einzelleitungen 61, 62 ist der Neutralleiter 9 angeordnet. Die zwei Schläuche 81, die das I<ühlfluid 5 der Einzelleitungen 61, 62 zurückführen, sind jeweils so angeordnet, dass sie in Kontakt mit einer der Einzelleitungen 61 oder 62 und dem Neutralleiter 9 sind. Die beiden Schläuche 81, die die Stecl<erl<ühlung 146 versorgen, sind jeweils so angeordnet, dass sie in Kontakt mit einer der Einzelleitungen 61 oder 62 und der Hülle 10 sind. So ergibt sich eine enge Packung aller Bestandteile des Ladekabels 12 und der beiden Einzelleitungen 61, 62. Zudem gibt es bei dieser Anordnung gleich acht Punkte die auf dem Umkreis der Anordnung liegen. Die Innenseite des Schutzmantels 7 entspricht genau dem Umkreis der Anordnung. Vier der acht Punkte liegen genau 90° voneinander entfernt und werden durch massive Leiter, die Einzelleitungen 61, 62, den Neutralleiter 9 und die Signalkabel 101 in ihrer Hülle 10, gebildet. Die potentiell komprimierbaren Schläuche 81 liegen zwischen diesen kaum komprimierbaren Strukturen. Bei starkem Druck können die Schläuche 81 wohl deformiert werden, durch die kaum komprimierbaren Strukturen auf beiden Seiten sind sie aber vor einem kompletten Verschluss geschützt.

In einer bevorzugten Ausführungsform ist die Stützstruktur beider Einzelleitungen 61, 62 eine Helix 011 aus Draht aus Chrom-Nickel-Stahl mit einem Drahtdurchmesser von 0.6 mm. Diese ist umgeben von mehreren Lagen Leitergeflecht 2 aus verzinnten Kupferdrähten, so dass sich ein Leiterquerschnitt 23 der Einzelleitung 61 von 35 mm$^2$ ergibt. Eine Isolation, bevorzugt aus TPE oder EPDM, umgibt das Leitergeflecht 2 und vervollständigt die Einzelleitung 61. Die Einzelleitung 62 ist gleich aufgebaut. Im Ladekabel 12 gibt es neben zwei derartigen Einzelleitungen 61, 62 sechs Signalkabel 101 mit einem Leiterquerschnitt 1013 von je 0.75 mm$^2$, die um einen Beilauf 11 angeordnet sind und mit einer gemeinsamen Hülle 10 zusammengehalten werden. Das I<abel umfasst ausserdem zwei Schläuche 81 mit je 4 mm Innendurchmesser, einen Neutralleiter 9 mit 16 mm$^2$ Leiterquerschnitt und zwei Stränge Beilauf 11. Die Anordnung erfolgt bevorzugt so wie in Figur 6c beschrieben, wobei allerdings die Schläuche 81 zur Versorgung der Stecl<erl<ühlung 146 durch Beilauf 11 ersetzt sind.

Figur 6d zeigt ein weiteres Ladekabel 12. Es beinhaltet eine erste und eine zweite Einzelleitung 61, 62, drei Schläuche 81, drei Stränge Beilauf 11, sechs Signalkabel 101, eine Neutralleitergeflecht 93 und einen Schutzmantel 7. Die sechs Signalkabel 101 sind um einen Strang Beilauf 11 angeordnet und mit einer Hülle 10 zusammengefasst.

Die Signalkabel 101, die Stränge des Beilaufs 11, die Schläuche 81 und die Einzelleitungen 61, 62 haben alle einen runden Querschnitt. Der Schutzmantel 7 hat die Form eines hohlen Kreiszylinders. Auf seiner Innenseite liegt das Neutralleitergeflecht 93 an, welches ebenfalls die Form eines runden Hohlzylinders hat. Im Inneren dieses vom Neutralleitergeflecht 93 gebildeten Hohlzylinders befinden sich die beiden Einzelleitungen 61, 62 und alle anderen Bestandteile des Ladekabels. Der Innenradius des Neutralleitergeflechts 93 ist gleich dem Durchmesser einer Einzelleitung 61. Der Durchmesser der beiden Einzelleitungen 61, 62 ist gleich gross. Das Neutralleitergeflecht 93 ist derart gestaltet, dass es eine geringe Vergrösserung seines Innenradius zulässt. Die Hülle 10 und einer der Schläuche 81 haben einen Durchmesser von in etwa 2/3 des Durchmessers der ersten Einzelleitung 61. Die zwei übrigen Schläuche 81 und die beiden Stränge Beilauf 11, die sich ausserhalb der Hülle 10 befinden, haben bevorzugt einen Durchmesser von in etwa 1/3 des Durchmessers der ersten Einzelleitung 61.

In einer bevorzugten Ausführungsform hat eine Einzelleitung 6 eine Helix 011 mit einem Durchmesser von 4 mm, bestehend aus Chrom-Nickel-Stahl Draht mit einem Durchmesser von 0.6 mm als Stützstruktur. Diese ist umgeben von mehreren Lagen Geflecht aus verzinntem Kupferdraht, wobei die Anzahl Drähte und der Durchmesser der Drähte derart gewählt werden, dass der Leiterquerschnitt 23 der Einzelleitung 6 35 mm$^2$ beträgt. Die Drahtlagen erstrecken sich in radialer Richtung von 2 mm bis 4 mm Abstand von der zentralen Längsachse der Einzelleitung 6. Diese Leiter 22 sind von einer Isolation, bevorzugt aus EPDM oder TPE, mit der Dicke von 2 mm umgeben, so dass die Einzelleitung 6 einen Durchmesser von 12 mm aufweist.

In einer bevorzugten Ausführungsform eines Ladekabels 12 umfasst es zwei dieser Einzelleitungen 61, 62, zwei Schläuche 81 aus Polyurethan (PUR) mit einem Aussendurchmesser von 4.0 mm und einen Schlauch 81 mit einem Aussendurchmesser von 8.0 mm, wobei die Wandstärke des grossen Schlauchs 81 1 mm und bei den kleinen Schläuchen 81 0.5 mm beträgt. Der Schlauch 81 mit 8.0 mm Aussendurchmesser nimmt das I<ühlfluid 5 auf, welches durch die I<anäle 4 beider Einzelleitungen 61, 62 geflossen ist und diese gekühlt hat. Die Schläuche 81 mit einem Aussendurchmesser von 4.0 mm dienen als Hin- und Rückleitung für eine Stecl<erl<ühlung 146. Ausserdem umfasst das Ladekabel 12 sechs Signalkabel 101 mit jeweils einem Leiterquerschnitt 1013 von 0.75 mm$^2$ und einem Leiterdurchmesser von 1 mm. Dieser ist umgeben von einer Isolierung 3 mit einer Wandstärke von 0.5 mm. Diese sechs Signalkabel 101 sind um einen Beilauf 11, bevorzugt aus PP oder PE, mit einem Durchmesser von 2 mm angeordnet. Um die sechs Signalkabel 101 herum ist eine Hülle 10 mit 0.5 mm Dicke angeordnet. Die ganze Anordnung ist mit einem Geflecht aus Kupferdrähten mit 0.25 mm Durchmesser umgeben, wobei das Geflecht einen Zylinder mit einem Innendurchmesser von 24 mm bildet. Ein Schutzmantel 7 mit einer Wandstärke von 2.75 mm umgibt alles, so dass das Ladekabel 12 insgesamt einen Durchmesser von 30 mm aufweist. Dieses Ladekabel 12 lässt sich einfach greifen. Es beinhaltet ein Volumen von 90.5 mm$^3$ Kupfer pro mm Länge und ein Volumen von 67.5 mm$^3$ Wasser pro mm Länge, wenn das Ladekabel 12 mit Wasser als I<ühlfluid 5 betrieben wird. Damit ergibt sich ein Gewicht von etwas weniger als 1 g/mm Länge des Ladekabels oder 1 I<g/m Kabellänge. Mit einer I<ühlung mit 20°C warmen Wasser und einer Durchflussrate von 1.8 l/min kann mit diesem Ladekabel 12 ein Strom von 700 A über 7m Länge übertragen werden ohne, dass die Oberfläche bei einer Umgebungstemperatur von 20°C heisser als 50°C wird. Unter denselben Bedingungen können fast 600 A übertragen werden, ohne dass das Ladekabel 12 irgendwo an seiner Oberfläche heisser als 40°C wird.

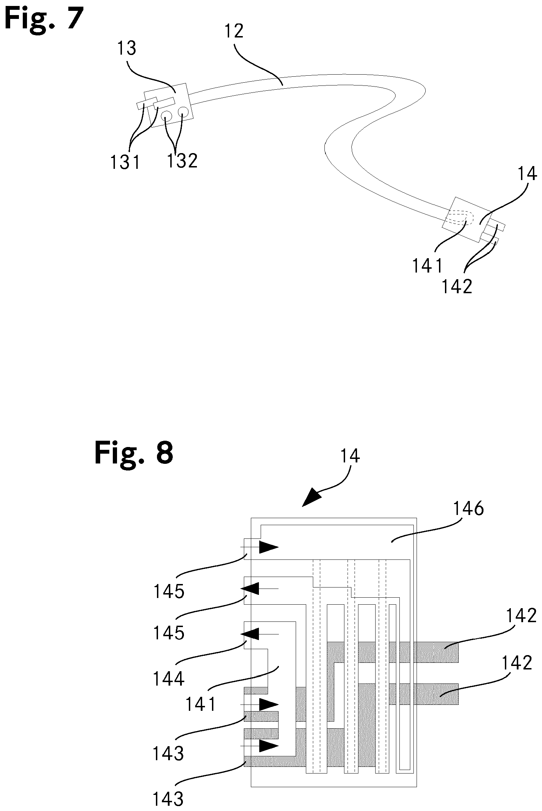

Figur 7 zeigt ein Ladesystem mit einem Ladekabel 12, einem Stecker 14 und einem Endanschluss 13. Der Endanschluss 13 umfasst elektrische Kontakte 131 und eine Fluidzuführung 132 für das I<ühlfluid 5. Die Fluidzuführung 132 ist derart gestaltet, dass eine Pumpe oder ein Leitungssystem, welches das I<ühlfluid 5 mit einem gewünschten Druckunterschied zwischen Zufluss und Abfluss der Fluidzuführung 132 zur Verfügung stellt. Die elektrischen Kontakte 131 sind derart gestaltet, dass sie mit einer Stromquelle, die die zu übertragende Leistung zur Verfügung stellt, verbunden werden können. Der Stecker 14 umfasst in seinem Inneren eine Fluidrückführung 141, die I<ühlfluid 5 aus einer der Einzelleitungen 61, 62 aufnimmt und in die andere Einzelleitung leitet oder die I<ühlfluid 5 aus beiden Einzelleitungen 61, 62 aufnimmt und dieses in einen oder zwei Schläuche 81 des Ladekabels leitet. Ausserdem umfasst der Stecker 14 elektrische Kontakte 142, mit denen eine elektrische Verbindung zum zu ladenden Energiespeicher hergestellt werden kann. Der Stecker 14 kann ausserdem weitere Kontakte umfassen, die mit Signalkabeln 101 verbunden sind und über die ein Datenaustausch zwischen den am Ladekabel 12 angeschlossenen Apparaten stattfinden kann.

Figur 8 zeigt einen Schnitt durch einen Stecker 14 mit einer Stecl<erl<ühlung 146. Der Stecker 14 umfasst drei Anschlüsse für Schläuche 81 des I<abels 145, 144 und zwei Anschlüsse für Einzelleitungen 143. Die zwei Anschlüsse für Einzelleitungen 143 sind als Rohre aus gut leitendem Material geformt. Das Leitergeflecht 2 und die gegebenenfalls das Leitergeflecht 2 umgebene Leiter 21, 22 werden mit dem Rohr in Kontakt gebracht, beispielsweise indem sie über die Aussenseite des Rohres gelegt werden und dort festgeklemmt und/oder verlötet werden. Durch dieses Festklemmen und/oder Verlöten wird das I<ühlfluid 5 daran gehindert, auf die Aussenseite des Rohres zu gelangen. Das Rohr hat bevorzugt einen Innendurchmesser, der in etwa gleichgross oder etwas grösser ist als der oder die Kanäle 4 der anzuschliessenden Einzelleitung 6. Das Rohrinnere ist bevorzugt aus einem elektrisch isolierenden Material gefertigt. Das Fluid tritt ins Innere des Rohres ein. Kurz hinter dem Anschluss, im Inneren des Steckers 14 teilt sich das Rohr: Das gut leitende Material der Rohrwand wird zusammengefasst und geht in die gewünschte Form des elektrischen Kontakts 142 am Steckerausgang über. Das isolierende Material im Rohrinneren formt ein Rohr, welches mit dem Rohr des Anschlusses für die zweite Einzelleitung 143 zusammenkommt und schliesslich zum Anschluss für einen Schlauch 144 führt. Dies ist die Fluidrückführung 141 des Steckers 14. Der Anschluss für einen Schlauch 144 kann aus einem sich in Richtung Stecker hin konisch erweiternden Rohr bestehen. Der Schlauch 81 kann über dieses Rohr gezogen werden und dann festgeklemmt werden. Auf dieselbe Art können die beiden anderen Anschlüsse für Schläuche 145 gestaltet sein. Diese stellen den Hin- und Rückfluss für die Stecl<erl<ühlung 146 dar. Dieses besteht aus einer oder mehreren Kühlleitungen, die an denjenigen Stellen des Steckers 14 vorbei führen, die spezielle gekühlt werden sollen.

Zusammenfassend ist festzustellen, dass die Leiterquerschnitte von den Einzelleitungen 6, dem Neutralleiter 9 und den Signalkabeln 101 den jeweiligen Anforderungen entsprechend gewählt werden können. Ebenso kann die Anordnung der Bestandteile des Ladekabels an die Anforderungen angepasst gewählt werden. So können beispielsweise Sensoren in das Ladekabel 12 integriert werden und die Anzahl der Signalkabel 101 kann höher oder niedriger gewählt werden. Insbesondere Stränge von Beilauf 11 können durch Signalkabel 101, Sensoren, weitere Schläuche 81, weitere Leiter zur Übertragung von elektrischer Leistung oder unstrukturiertes Füllmaterial ersetzt werden. Der Schutzmantel 7 kann verstärkt werden, zum Beispiel mit elektrisch isolierten Ringen oder eine Drahthelix um die Überrollfestigl<eit nochmal zu verbessern. Auch kann um den Schutzmantel 7 herum eine weitere Verstärkung angebracht werden. Anstelle von verzinntem Kupfer kann, überall oder nur in Teilen der Einzelleitungen 6 und/oder des Ladekabels, blankes Kupfer, Kupferlegierungen, Aluminium oder andere Leitermaterialien eingesetzt werden. Ebenso können die Schläuche 81 aus EPDM, Nylon, Polyamide oder Silikon sein. Die Wandstärken von Isolierungen und Schläuchen 81 können gemäss den jeweiligen Anforderungen gewählt werden. Das Material des Schutzmantels 7 und das Material der Isolierung 3 der Einzelleitungen 61, 62 können identisch sein. Auf die Hülle 10 der Signalkabel 101 kann verzichtet werden. Das Leitergeflecht 2 kann anstelle der Form eines Hohlzylinders auch in Form eine Matte vorliegen, die dann zu einem Hohlzylinder gewickelt wird. Drähte und Gruppen von Drähten können durch Bänder oder Litzen aus mehreren Drähten ersetzt werden. Der Schutzmantel 7 muss nicht rund sein, sondern kann sich auch der Form der I<abelbestandteile oder an äussere Gegebenheiten anpassen.

**Patentansprüche**

1.  Einzelleitung (6) für ein Ladekabel (12), umfassend

    a) eine offene Stützstruktur (011,012) mit einer Längsausdehnung,
    b) ein Leitergeflecht (2) aus Leitern und
    c) eine Isolierung (3)
    wobei
    d) das Leitergeflecht (2) die offene Stützstruktur (011,012) entlang ihrer Längsausdehnung unmittelbar umhüllt und
    e) die Isolierung (3) die offene Stützstruktur (011,012) und das Leitergeflecht (2) umhüllt und
    f) mindestens ein I<anal (4) für ein I<ühlfluid (5) vorhanden ist und dieser I<anal (4) durch die Stützstruktur (011,012) und das Leitergeflecht (2) gebildet wird, und
    g) wobei das Leitergeflecht (2) für das I<ühlfluid (5) insbesondere durchdringbar ist und
    h) wobei die Isolierung (3) für das I<ühlfluid (5) undurchdringbar ist und elektrisch isolierend ist **dadurch gekennzeichnet, dass**
    i) das Leitergeflecht (2) entlang seiner Längsausdehnung von weiteren Leitern (21, 22) umgeben ist, die mit dem Leitergeflecht (2) in elektrischen Kontakt sind, wobei die weiteren Leiter (21, 22) entweder selbst als ein oder mehrere Geflechte (22) gestaltet sind, die koaxial um das Leitergeflecht (2) herum angeordnet sind, oder um das Leitergeflecht (2) herum verdrillt (21) sind,
    j) und wobei die offene Stützstruktur eine längliche Struktur ist, deren konvexe Hülle die Form eines Zylinders hat, wobei entlang und im Inneren der konvexen Hülle mindestens ein durchgehender Kanal, also ein I<anal der nicht von der Struktur unterbrochen wird, verläuft.

2.  Einzelleitung (6) nach Anspruch 1, wobei die Stützstruktur eine Helix (011) oder ein offenes Profil (012), insbesondere ein offenes Profil (012) mit einem Stern-Querschnitt, ist.

3.  Einzelleitung (6) nach Anspruch 2, wobei die Stützstruktur eine Helix (011) aus Metall, insbesondere aus Kupfer oder Stahl, bevorzugt aus Chrom-Nickel-Stahl, ist.

4.  Einzelleitung (6) nach einem der Ansprüche 1 bis 3, wobei die Leiter Drähte sind, und zwar insbesondere mit rundem Querschnitt und bevorzugt aus Kupfer, besonders bevorzugt aus verzinntem Kupfer.

5. Einzelleitung (6) nach Anspruch 4, wobei

a) eine Form des Querschnitts einer konvexen Hülle der Stützstruktur (011, 012) entlang der Längsausdehnung der Stützstruktur (011,012) im Wesentlichen gleich bleibt und

b) Berührungspunkte der Stützstruktur (011,012) mit ihrer konvexen Hülle Stützstrukturlinien bilden und

c) der Winkel (0113a, b), unter dem zumindest einige der Drähte des Leitergeflechtes (2) zumindest einige Stützstrukturlinien kreuzen zwischen 45° und 135°, bevorzugt zwischen 60° und 120° beträgt.

6. Einzelleitung (6) nach einem der Ansprüche 2 bis 5, wobei die Stützstruktur ein offenes Profil (012) ist, dessen Querschnitt in seiner Form und Grösse entlang der Längsausdehnung konstant bleibt, sich diese Form aber entlang der Längsausdehnung um eine Längsachse (0121) verdreht.

7. Ladekabel (12) umfassend

a) eine erste und eine zweite Einzelleitung (61, 62) nach einem der Ansprüche 1 bis 6 und

b) einen gemeinsamen Schutzmantel (7).

8. Ladekabel (12) gemäss Anspruch 7 weiter umfassend ein Neutralleitergeflecht (93), das die erste und die zweite Einzelleitung (61, 62) umgibt und vom gemeinsamen Schutzmantel (7) umhüllt ist oder in diesen integriert ist.

9. Ladekabel (12) gemäss einem der Ansprüche 7 bis 8, umfassend mindestens einen Schlauch (81), bevorzugt zwei, drei oder vier Schläuche (81), aus einem fluiddichten Material, welche sich innerhalb des gemeinsamen Schutzmantels (7) befinden, aber ausserhalb der ersten oder zweiten Einzelleitung (61, 62).

10. Ladekabel (12) gemäss einem der Ansprüche 7 bis 9, umfassend ein oder mehrere der folgenden Bestandteile: Neutralleiter (9), umhüllte Signalkabel (10, 101), Schlauch (81), Beilauf(11) und

a) jeder dieser Bestandteile einen im Wesentlichen kreisförmigen Querschnitt aufweist und einen Umkreisradius hat und

b) die erste und die zweite Einzelleitung (61, 62) jeweils einen runden Querschnitt haben und die Querschnitte der ersten und der zweiten Einzelleitung (61, 62) den gleichen Umkreisradius R haben, und

c) der Umkreisradius von jedem der vorkommenden Bestandteile kleiner oder gleich als 2/3 des Umkreisradius R der ersten Einzelleitung (61) ist und

d) der Umkreisradius der vorkommenden Bestandteile insbesondere im Wesentlichen gleich 1/3 oder 2/3 des Umkreisradius R der ersten Einzelleitung (61) ist und es insbesondere nicht mehr als zwei Bestandteile mit einem Umkreisradius von 2/3 des Umkreisradius R der ersten Einzelleitung (61) und nicht mehr als vier Bestandteile mit einem Umkreisradius von 1/3 des Umkreisradius R der ersten Einzelleitung (61) in einem Ladekabel (12) gibt.

11. Ladesystem umfassend ein Ladekabel (12) gemäss einem der Ansprüche 7 bis 10, einen Endanschluss (13) und einen Stecker (14),

a) wobei der Endanschluss (13) eine Fluidzuführung (132) umfasst, welche Fluid in zumindest den Kanal (4) der ersten Einzelleitung (61) einführt und Fluid aus dem Kanal (4) der zweiten Einzelleitung (62) und/oder aus mindestens einem Schlauch (81) aufnimmt

b) und der Stecker (14) eine Fluidrückführung (141) umfasst, welche das Fluid aus zumindest dem Kanal (4) der ersten Einzelleitung (61) aufnimmt und zu dem Kanal (4) der zweiten Einzelleitung (62) und/oder dem mindestens einen Schlauch (81) führt.

12. Ladesystem umfassend ein Ladekabel (12) mit einem Schlauch (81) gemäss Anspruch 11,

a) wobei der Endanschluss (13) eine Fluidzuführung (132) umfasst, welche Fluid in die Kanäle (4) der ersten und der zweiten Einzelleitung (61, 62) einführt und Fluid aus dem mindestens einen Schlauch (81) des Ladekabels (12) aufnimmt

b) und der Stecker (14) eine Fluidrückführung (141) umfasst, welche das Fluid aus den Kanälen (4) der ersten und der zweiten Einzelleitung (61, 62) aufnimmt und zu den Schläuchen (81) führt.

13. Ladesystem gemäss einem der Ansprüche 11 bis 12 umfassend ein Ladekabel (12) mit mindestens zwei Schläuchen (81) und einem Stecker (14) mit einer Steckerkühlung (142), wobei die Steckerkühlung (142) mindestens eine Kühlleitung umfasst, in die aus einem der mindestens zwei Schläuche (81) Kühlfluid (5) eingebracht werden kann und wobei dieses Kühlfluid (5) durch einen anderen der mindestens zwei Schläuche (81) wieder abfliessen kann.

14. Verfahren zum Laden eines Energiespeichers, insbesondere einer Batterie eines Fahrzeugs, an einer stationären Ladestation, die I<ühlfluid (5) und elektrische Energie zur Verfügung stellen kann und an welche ein erstes Ende eines Ladekabels (12) gemäss einem der Ansprüche 7 bis 10 angeschlossen ist, umfassend die Schritte:

a) Anschliessen eines zweiten Endes des Ladekabels (12) an den Energiespeicher, insbesondere an die Batterie des Fahrzeuges,
b) Einbringen eines I<ühlfluids (5) unter Druck, insbesondere pumpen eines I<ühlfluid (5), in die Kanäle (4) der Einzelleitungen (61, 62) des Ladekabels (12),
c) Übertragen von elektrischer Energie über das Leitergeflecht (2) und gegebenenfalls die Leiter (21, 22) der Einzelleitungen (61, 62) des Ladekabels (12),

wobei insbesondere Signalkabel (101) des Ladekabels (12) zur Übertragung von Signalen zur Steuerung und/oder Überwachung des Ladevorganges und/oder des Ladezustands des Energiespeichers, insbesondere der Batterie, genutzt werden.

**Claims**

1. Single line (6) for a charging cable (12), comprising

a) an open support structure (011, 012) with a longitudinal extent,
b) a conductor netting (2) of conductors and
c) an insulation (3),
wherein
d) the conductor netting (2) envelops the open support structure (011, 012) directly along its longitudinal extent and
e) the insulation (3) envelops the open support structure (011, 012) and the conductor netting (2) and
f) there is at least one channel (4) for a cooling fluid (5) and this channel (4) is formed by the support structure (011, 012) and the conductor netting (2), and
g) wherein the conductor netting (2) is in particular permeable for the cooling fluid (5) and
h) wherein the insulation (3) is impermeable for the cooling fluid (5) and is electrically insulating, **characterised in that**
i) the conductor netting (2) is along its longitudinal extent surrounded by further conductors (21, 22) which are in electrical contact with the conductor netting (2), wherein the further conductors (21, 22) either are themselves formed as one or several netting/s (22) which are arranged coaxially around the conductor netting (2) or are twisted (21) around the conductor netting (2),
j) and wherein the open support structure is an elongate structure whose convex envelope has the shape of a cylinder, wherein at least one through-channel, i. e. a channel that is not interrupted by the structure, extends along and within the convex envelope.

2. Single line (6) according to claim 1, wherein the support structure is a helix (011) or an open profile (012), in particular an open profile (012) with a star-like cross section.

3. Single line (6) according to claim 2, wherein the support structure is a helix (011) made of metal, in particular of copper or steel, preferably of chromium-nickel steel.

4. Single line (6) according to one of claims 1 to 3, wherein the conductors are wires, in particular having a round cross section and preferably made of copper, particularly preferably of tin-plated copper.

5. Single line (6) according to claim 4, wherein

a) a shape of the cross section of a convex envelope of the support structure (011, 012) remains substantially constant along the longitudinal extent of the support structure (011, 012) and '
b) contact points of the support structure (011, 012) with its convex envelope form support structure lines and
c) the angle (0113a, b) by which at least some of the wires of the conductor netting (2) intersect with at least some support structure lines is between 45° and 135°, preferably between 60° and 120°.

6. Single line (6) according to one of claims 2 to 5, wherein the support structure is a profile (012) whose cross section remains constant with regard to its shape and size along the longitudinal extent, whereas said shape is rotated along the longitudinal extent around a longitudinal axis (0121).

7. Charging cable (12), comprising

a) a first and a second single line (61, 62) according to one of claims 1 to 6 and
b) a common protective jacket (7).

8. Charging cable (12) according to claim 7, further comprising a neutral-conductor netting (93) surrounding the first and the second single line (61, 62) and enveloped by the common protective jacket (7) or integrated in said common protective jacket (7).

9. Charging cable (12) according to one of claims 7 to 8, comprising at least one hose (81), preferably two, three or four hoses (81), made of a fluid-tight material and situated within the common protective jacket (7) but outside the first or second single line (61, 62).

10. Charging cable (12) according to one of claims 7 to 9, comprising one or several of the following components: neutral conductor (9), enveloped signal cables (10, 101), hose (81), drain (11) and

   a) each of this components has a substantially circle-shaped cross section and a circumcircle radius, and
   b) the first and the second single line (61, 62) in each case have a round cross section, the cross sections of the first and the second single line (61, 62) having the same circumcircle radius R, and
   c) the circumcircle radius of each of the existing components is smaller than or equal to 2/3 of the circumcircle radius R of the first single line (61), and
   d) the circumcircle radius of the existing components is in particular substantially equal to 1/3 or 2/3 of the circumcircle radius R of the first single line (61), and there are in particular no more than two components having a circumcircle radius of 2/3 of the circumcircle radius R of the first single line (61) and no more than four components having a circumcircle radius of 1/3 of the circumcircle radius R of the first single line (61) in a charging cable (12).

11. Charging system comprising a charging cable (12) according to one of claims 7 to 10, an end connection (13) and a plug (14),

   a) wherein the end connection (13) comprises a fluid feed (132) which introduces fluid at least into the channel (4) of the first single line (61) and receives fluid from the channel (4) of the second single line (62) and/or from at least one hose (81),
   b) and the plug (14) comprises a fluid refeed (141) which receives the fluid at least from the channel (4) of the first single line (61) and conveys the fluid to the channel (4) of the second single line (62) and/or to the at least one hose (81).

12. Charging system comprising a charging cable (12) with a hose (81) according to claim 11,

   a) wherein the end connection (13) comprises a fluid feed (132) which introduces fluid into the channels (4) of the first and the second single line (61, 62) and receives fluid from the at least one hose (81) of the charging cable (12),
   b) and the plug (14) comprises a fluid refeed (141) which receives the fluid from the channels (4) of the first and the second single line (61, 62) and conveys the fluid to the hoses (81).

13. Charging system according to one of claims 11 to 12, comprising a charging cable (12) with at least two hoses (81) and with a plug (14) having a plug cooling (142),
   wherein the plug cooling (142) comprises at least one cooling conduit into which cooling fluid (5) can be introduced from one of the at least two hoses (81), and wherein said cooling fluid (5) can flow off through another one of the at least two hoses (81).

14. Method for charging an energy storage, in particular a battery of a vehicle, at a stationary charging station which is capable of providing cooling fluid (5) and electrical energy and which a first end of a charging cable (12) according to one of claims 7 to 10 is connected to,
   comprising the steps:

   a) connecting a second end of the charging cable (12) to the energy storage, in particular to the battery of the vehicle,
   b) introducing a cooling fluid (5) under pressure, in particular pumping a cooling fluid (5) into the channels (4) of the single lines (61, 62) of the charging cable (12),
   c) transmitting electrical energy via the conductor netting (2) and, if applicable, via the conductors (21, 22) of the single lines (61, 62) of the charging cable (12),

   wherein in particular signal cables (101) of the charging cable (12) are used for a transmission of signals for a control and/or monitoring of the charging process and/or of the charging state of the energy storage, in particular the battery.

**Revendications**

1. Ligne seule (6) pour un câble chargeur (12), comprenant

   a) une structure de support ouverte (011, 012) ayant une étendue longitudinale,
   b) un enlacement-conducteurs (2) de conducteurs et
   c) une isolation (3),
   où
   d) l'enlacement-conducteurs (2) enveloppe la structure de support ouverte (011, 012) directement le long de son étendue longitudinale et

e) l'isolation (3) enveloppe la structure de support ouverte (011, 012) et l'enlacement-conducteurs (2) et

f) il y a au moins un canal (4) pour un fluide réfrigérant (5), ledit canal (4) étant formé par la structure de support (011, 012) et l'enlacement-conducteurs (2), et

g) où l'enlacement-conducteurs (2) est en particulier perméable pour le fluide réfrigérant (5) et

h) où l'isolation (3) est imperméable pour le fluide réfrigérant (5) et est électriquement isolant,

**caractérisée en ce que** l'enlacement-conducteurs (2) est entouré le long de son étendue longitudinale par des conducteurs de plus (21, 22) qui sont en contact électrique avec l'enlacement-conducteurs (2), où les conducteurs de plus (21, 22) ou sont réalisés ils-mêmes comme un ou plusieurs enlacement/s-conducteurs (22) disposés coaxialement autour de l'enlacement-conducteurs (2) ou sont torsadés autour de l'enlacement-conducteurs (2), j) et où la structure de support ouverte est une structure allongée, l'enveloppe convexe de laquelle a la forme d'un cylindre, où au moins un canal continu, c'est-à-dire un canal qui n'est pas interrompu par la structure, s'étend le long et à l'intérieur de l'enveloppe convexe.

2. Ligne seule (6) selon la revendication 1, où la structure de support est une hélice (011) ou un profil ouvert (012), en particulier un profil ouvert (012) ayant une coupe transversale en étoile.

3. Ligne seule (6) selon la revendication 2, où la structure de support est une hélice (011) en métal, notamment en cuivre ou acier, de préférence en acier au nickel et chrome.

4. Ligne seule (6) selon l'une des revendications 1 à 3, où les conducteurs sont des fils métalliques, en particulier ayant une coupe transversale ronde et de préférence en cuivre, particulièrement préférablement en cuivre étamé.

5. Ligne seule (6) selon la revendication 4, où

a) une forme de la coupe transversale d'une enveloppe convexe de la structure de support (011, 012) reste sensiblement constante le long de l'étendue longitudinale de la structure de support (011, 012) et

b) des points de contact de la structure de support (011, 012) avec son enveloppe convexe forment des lignes de structure de support et

c) l'angle (0113a, b), sous lequel au moins quelques des fils métalliques de l'enlacement-conducteurs (2) intersectent avec au moins quelques lignes de structure de support, est entre 45° et 135°, préférablement entre 60° et 120°.

6. Ligne seule (6) selon l'une des revendications 2 à 5, où la structure de support est un profil ouvert (012) la coupe transversale duquel reste constante quant à sa forme et sa taille le long de l'étendue longitudinale, mais ladite forme se tourne le long de l'étendue longitudinale autour d'un axe longitudinal (0121).

7. Câble chargeur (12), comprenant

a) une première et une deuxième ligne seule (61, 62) selon l'une des revendications 1 à 6 et
b) une gaine protective (7) commune.

8. Câble chargeur (12) selon la revendication 7, comprenant aussi un enlacement de conducteurs neutres (93) entourant la première et la deuxième ligne seule (61, 62) et enveloppé par la gaine protective commune (7) ou intégrée dans ladite gaine protective commune (7).

9. Câble chargeur (12) selon l'une des revendications 7 à 8, comprenant au moins un tuyau (81), de préférence deux, trois ou quatre tuyaux (81), d'un matériau étanche à fluide, qui sont situés dans la gaine protective commune (7) mais au dehors de la première ou de la deuxième ligne seule (61, 62).

10. Câble chargeur (12) selon l'une des revendications 7 à 9, comprenant un ou plusieurs des composants suivants : conducteur neutre (9), câbles de signal enveloppés (10, 101), tuyau (81), bourrage (11) et

a) chacun desdits composants présente une coupe transversale sensiblement en forme de cercle aussi qu'un radius de cercle circonscrit et
b) la première et la deuxième ligne seule (61, 62) respectivement ont une coupe transversale ronde, les coupes transversales de la première et de la deuxième ligne seule (61, 62) ayant le même radius de cercle circonscrit R et
c) le radius de cercle circonscrit de chacun des composants existants est inférieur ou égal à 2/3 du radius de cercle circonscrit R de la première ligne seule (61) et
d) le radius de cercle circonscrit des composants existants est en particulier sensiblement égal à 1/3 ou 2/3 du radius de cercle circonscrit R de la première ligne seule (61) et il n'y a en particulier pas plus de deux composants ayant un radius de cercle circonscrit de 2/3 du radius de cercle circonscrit R de la première ligne seule (61) et pas plus de quatre composants ayant un radius de cercle circonscrit de 1/3 du radius de cercle circonscrit R de la première ligne seule (61) dans un câble chargeur (12).

11. Système de chargement, comprenant un câble chargeur (12) selon l'une des revendications 7 à 10, une connexion d'extrémité (13) et une fiche (14),

a) où la connexion d'extrémité (13) comprend une alimentation de fluide (132) qui introduit du fluide au moins dans le canal (4) de la première ligne seule (61) et reçoit du fluide du canal (4) de la deuxième ligne seule (62) et/ou d'au moins un tuyau (81)
b) et la fiche (14) comprend une réalimentation de fluide (141) qui reçoit le fluide au moins du canal (4) de la première ligne seule (61) et le transporte au canal (4) de la deuxième ligne seule (62) et/ou à l'au moins un tuyau (81).

12. Système de chargement, comprenant un câble chargeur (12) avec un tuyau (81) selon la revendication 11,

a) où la connexion d'extrémité (13) comprend une alimentation de fluide (132) qui introduit du fluide dans les canaux (4) de la première et de la deuxième ligne seule (61, 62) et reçoit du fluide de l'au moins un tuyau (81) du câble chargeur (12)
b) et la fiche (14) comprend une réalimentation de fluide (141) qui reçoit le fluide des canaux (4) de la première et de la deuxième ligne seule (6162) et transporte le fluide aux tuyaux (81).

13. Système de chargement selon l'une des revendications 11 à 12, comprenant un câble chargeur (12) avec au moins deux tuyaux (81) et avec une fiche (14) ayant une réfrigération-fiche (142),

où la réfrigération-fiche (142) comprend au moins un conduit de réfrigération dans lequel un fluide réfrigérant (5) peut être introduit de l'un des au moins deux tuyaux (81) et où ledit fluide réfrigérant (5) peut s'écouler par un autre des au moins deux tuyaux (81).

14. Procédé de chargement d'un stockage d'énergie, notamment d'une batterie d'un véhicule, à une borne de recharge stationnaire qui peut fournir du fluide réfrigérant (5) et de l'énergie électrique et à laquelle une première extrémité d'un câble chargeur (12) selon l'une des revendications 7 à 10 est raccordée, comprenant les étapes :

a) raccorder une deuxième extrémité du câble chargeur (12) au stockage d'énergie, en particulier à la batterie du véhicule,
b) introduire un fluide réfrigérant (5) sous pression, en particulier pomper un fluide réfrigérant (5), dans les canaux (4) des lignes seules (61, 62) du câble chargeur (12),
c) transmettre de l'énergie électrique par le biais de l'enlacement-conducteurs (2) et, le cas échéant, des conducteurs (21, 22) des lignes seules (61, 62) du câble chargeur (12),

où en particulier des câbles de signal (101) du câble chargeur (12) sont utilisés pour la transmission de signaux pour la commande et/ou surveillance du procès de chargement et/ou de l'état de chargement du stockage d'énergie, en particulier de la batterie.

Fig. 1a

Fig. 1b

Fig. 1c

Fig. 2

**Fig. 3a**

**Fig. 3b**

**Fig. 3c**

**Fig. 4a**

**Fig. 4b**

**Fig. 5**

**Fig. 6a**

**Fig. 6b**

**Fig. 6c**

**Fig. 6d**

# Fig. 7

13

12

131 132

14

141

142

# Fig. 8

14

146

145

145

144

141

143

143

142

142

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 106782835 A
- US 2012199390 A1
- CN 106849227 A
- CN 106887277 A
- DE 202015009531 U1
- EP 3179485 A1